(19) Europäisches Patentamt
European Patent Office
Office européen des brevets

(11) **EP 2 749 982 B1**

(12) **EUROPÄISCHE PATENTSCHRIFT**

(45) Veröffentlichungstag und Bekanntmachung des Hinweises auf die Patenterteilung:
**01.01.2020 Patentblatt 2020/01**

(51) Int Cl.:
***G05D 1/02*** *(2006.01)*

(21) Anmeldenummer: **13192435.9**

(22) Anmeldetag: **12.11.2013**

(54) **Bezugsmodellerzeugung und Aktualisierung**

Generation and updating of reference models

Production de modèles de référence et actualisation

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.11.2012 DE 102012110860**

(43) Veröffentlichungstag der Anmeldung:
**02.07.2014 Patentblatt 2014/27**

(73) Patentinhaber: **Einhell Germany AG**
**94405 Landau / Isar (DE)**

(72) Erfinder: **Thannhuber, Markus**
**94405 Landau OT Fichtheim (DE)**

(74) Vertreter: **Wittmann, Ernst-Ulrich**
**Withers & Rogers LLP**
**Kaulbachstrasse 114**
**80802 München (DE)**

(56) Entgegenhaltungen:
**EP-A1- 1 450 228     EP-A2- 1 707 984**
**US-A- 5 363 305     US-A- 5 957 984**
**US-A- 5 974 347**

**Beschreibung**

Die Erfindung betrifft ein Verfahren zur Erzeugung und Aktualisierung einer virtuellen Repräsentation eines Raums. Insbesondere betrifft die vorliegende Erfindung ein Verfahren zur Erzeugung und Aktualisierung einer virtuellen Repräsentation eines Raums mit hierin angeordneten Referenz-Markern.

Die mittels des Verfahrens der vorliegenden Erfindung erzeugte und vorzugsweise kontinuierlich aktualisierte virtuelle Repräsentation wird bevorzugt in Verbindung mit einem Verfahren zur Bestimmung der Position und/oder Orientierung eines beweglichen Objekts, wie zum Beispiel einem Roboter, verwendet und nachfolgend auch anhand dessen beschrieben. Ein Beschränkung hierauf besteht jedoch nicht und es sind vielmehr eine Vielzahl weiterer, nicht ausdrücklich beschriebener, Ausführungsformen des erfindungsgemäßen Verfahrens und Verwendungen der hiermit erzeugten virtuellen Repräsentationen möglich. Ein in Verbindung mit den virtuellen Repräsentationen gemäß der vorliegenden Erfindung bevorzugt zum Einsatz kommendes Verfahren zur Bestimmung der Position und/oder Orientierung eines beweglichen Objekts wird in einer weiteren Patentanmeldung der gleichen Anmelderin beschrieben.

Verfahren zur Erzeugung und Aktualisierung einer virtuellen Repräsentation eines Raums sind im Stand der Technik beispielsweise in der Kartographie bekannt. Solche virtuellen Repräsentationen, beispielsweise in der Form von elektronischen Karten, werden zum Beispiel in Verbindung mit Navigationsanwendungen verwendet, das heißt, die Position von beweglichen Objekten, wie zum Beispiel Schiffen oder Luftfahrzeugen kann mit Hilfe der virtuellen Repräsentationen durch Angulation im Raum ermittelt werden.

Derartige Navigationsanwendungen haben jedoch den Nachteil, dass grundsätzlich zunächst eine Karte vorhanden sein muss, auf deren Basis die aktuelle Position des beweglichen Objekts bestimmt werden kann. In der Regel erfordern dabei Erstellung und Aktualisierung solcher Karten ein Instrumentarium, das dem Navigationsinstrumentarium nicht oder nur bedingt entspricht, so dass der Prozess der Erstellung und auch der Aktualisierung der Karten unabhängig von deren eigentlicher Verwendung abläuft.

Die Karten müssen also zunächst vollständig erstellt und mittels beliebiger Kommunikationsmittel an den Navigator übertragen werden, bevor sie bei der Bestimmung der aktuellen Position des beweglichen Objekts zum Einsatz kommen können. Sie sind dabei üblicherweise statisch und Veränderungen, insbesondere dynamische Veränderungen des kartographierten Raums können nur durch ein gesondertes Aktualisieren und erneutes übertragen des aktualisierten Kartenmaterials an den Navigator berücksichtigt werden. Darüber hinaus ist es bei solchen Karten üblich, nur solche Objekte oder Gegenstände als Referenz-Objekte in die Karte aufzunehmen, deren Position im Raum absolut ist, d.h. im Wesentlichen keinerlei örtlichen Veränderung unterliegt.

Die Statik solcher Karten kann insbesondere bei deren Verwendung zur Bestimmung der Position und/oder Orientierung von beweglichen Objekten in veränderlichen Umgebungen einen erheblichen Nachteil bei der Anwendung darstellen. Insbesondere auch in solchen Fällen, bei denen Referenz-Objekte der Karten, welche letztlich als Grundlage für die Angulation dienen, örtlichen Veränderungen unterliegen können - selbst wenn diese nur gering sind - sind die bekannten Verfahren zur Erstellung und Aktualisierung von virtuellen Repräsentationen von Räumen kaum mehr anwendbar.

Vor diesem Hintergrund ist es Aufgabe der vorliegenden Erfindung, die Nachteile des Stands der Technik wenigstens teilweise zu überwinden und ein Verfahren und eine Vorrichtung zur Erzeugung und Aktualisierung von virtuellen Repräsentationen von Räumen zur Verfügung zu stellen, welches eine Dynamik des Raums und insbesondere darin angeordneter Referenz-Objekte berücksichtigen kann.

Diese Aufgabe wird durch ein Verfahren gemäß dem unabhängigen Anspruch 1 sowie eine Vorrichtung gemäß dem unabhängigen Anspruch 13 gelöst. Bevorzugte Ausführungsformen und Weiterbildungen sind Gegenstand der abhängigen Ansprüche.

Demnach stellt die vorliegende Erfindung ein Verfahren zur Erzeugung und/oder Aktualisierung von Positionen von innerhalb einer virtuellen Repräsentation gespeicherten Referenz-Punkten, die Positionen von Referenz-Markern in einem Raum entsprechen, zur Verfügung, wobei die gespeicherten Referenz-Punkte mit Positions-Unsicherheiten verknüpft sind, und wobei die virtuelle Repräsentation in einem ersten Speicher gespeichert ist, und wobei das Verfahren umfasst:

bestimmen einer ersten Positions-Information innerhalb der virtuellen Repräsentation für ein bewegliches Objekt, die einer ersten Position des beweglichen Objekts im Raum im wesentlichen entspricht, wobei die erste Positions-Information mit ersten Orts-Unsicherheiten in jeder Dimension beaufschlagt ist;

erfassen, an der ersten Position im Raum, von ersten Richtungs-Informationen von einem oder mehreren Referenz-Markern im Raum, bezogen auf eine Achse des beweglichen Objekts, durch wenigstens ein Detektionssystem, das mit dem beweglichen Objekt verbunden ist, wobei die ersten Richtungs-Informationen mit ersten Richtungs-Unsicherheiten beaufschlagt sind;

bewegen des beweglichen Objekts zu einerzweiten Position im Raum, wobei die zweite Position eine bekannte Wegstrecke von der ersten Position entfernt ist;

bestimmen einer zweiten Positions-Information innerhalb der virtuellen Repräsentation für das bewegliche Objekt, die derzweiten Position im Raum im Wesentlichen entspricht, wobei die zweite Positions-Information mit zweiten Orts-Unsicherheiten in jeder Dimension beaufschlagt ist;

erfassen, an der zweiten Position im Raum, von zweiten Richtungs-Informationen von einem oder mehreren Referenz-Markern im Raum, bezogen auf eine Achse des beweglichen Objekts, durch das Detektionssystem, wobei die zweiten Richtungs-Informationen mit zweiten Richtungs-Unsicherheiten beaufschlagt sind;

identifizieren eines oder der mehrerer Referenz-Marker, zu denen die ersten und zweiten Richtungs-Informationen jeweils eindeutig zuordenbar sind;

berechnen der Position von Referenz-Punkten in der virtuellen Repräsentation fürjeden identifizierten Referenz-Marker auf der Basis der ersten und/oder der zweiten Richtungs-Informationen und der ersten bzw. zweiten Positions-Information, wobei die Position jedes berechneten Referenz-Punkts mit berechneten Positions-Unsicherheiten in jeder Dimension beaufschlagt ist; und

speichern der Position jedes berechneten Referenz-Punkts, zusammen mit dessen Positions-Unsicherheiten in einem zweiten Speicher;

vergleichen der Position jedes berechneten Referenz-Punkts und dessen Positions-Unsicherheiten jeweils mit der Position seines korrespondierenden gespeicherten Referenz-Punkts und dessen Positions-Unsicherheiten.

Beim erfindungsgemäßen Verfahren wird also zunächst eine in einem ersten Speicher gespeicherte virtuelle Repräsentation eines Raums vorgesehen, wobei die virtuelle Repräsentation Referenz-Punkte enthält, deren Positionsinformationen im Wesentlichen zu Positionen von Referenz-Markern in dem Raum korrespondieren. Die Referenz-Punkte sind dabei auch mit Informationen zu Positions-Unsicherheiten verknüpft, das heißt, innerhalb der virtuellen Repräsentation - oder mit dieser verknüpft - sind bereits Informationen vorgesehen, die über die Genauigkeit, Stabilität oder Konfidenz des oder der jeweiligen Referenz-Marker Auskunft geben, also insbesondere darüber inwieweit eine gemessene Position des oder der jeweiligen Referenz-Marker verlässlich ist oder aber mit welchem möglichen Fehler die Messung behaftet ist.

Ausführungsformen von Referenz-Markern gemäß der vorliegenden Erfindung weisen beispielsweise Reflektoren auf, die elektromagnetische Wellen oder Schallwellen reflektieren. Dabei kann ein breites Spektrum dieser Wellen eingesetzt werden, vorzugsweise aber Wellenlängen, bei denen die Reflektoren nicht allzu groß gewählt werden müssen. So kommen bei elektromagnetischen Wellen bevorzugt Mikrowellen, fernes oder nahes Infrarot, sichtbares Licht oder nahes Ultraviolett zum Einsatz; bei Schallwellen wird bevorzugt Ultraschall, besonders bevorzugt Schall mit Frequenzen von 15 bis 200 kHz, eingesetzt.

Als Reflektoren werden beispielseiweise Retroreflektoren, insbesondere Tripelspiegel, verwendet, die elektro-magnetische Wellen oder Schallwellen deutlich besser als ihre Umgebung reflektieren und bevorzugt auch eine direktionale Charakteristik der eintreffenden Strahlung bei der reflektierten Strahlung im Wesentlichen beibehalten. Je nach Art und Wellenlänge der verwendeten elektro-magnetischen Wellen oder Schallwellen weisen diese Retroreflektoren verschiedene Ausgestaltungen auf. Wird beispielsweise sichtbares Licht oder nahes Infrarot verwendet, dann können diese Retroreflektoren insbesondere als Rückstrahler, Reflektorfolien oder als sog. Katzenaugen ausgestaltet sein. Werden Schallwellen zur Detektion verwendet, dann kommen entsprechende Schall-Reflektoren zum Einsatz, beispielsweise ein oder mehrere nach vorne offene Tetraeder, die - ähnlich wie im vorhergehenden Fall - an räumlich unveränderlichen oder räumlich veränderlichen Gegenständen angebracht sind.

Die Referenz-Marker mit den Retroreflektoren können räumlich unveränderlich oder räumlich veränderlich ausgestaltet sein, was sich unmittelbar auf die mit den hierzu korrespondierenden Referenz-Punkten verknüpften Positions-Unsicherheiten der virtuellen Repräsentation auswirkt bzw. davon wiedergegeben wird. Wird beispielsweise sichtbares Licht oder nahes Infrarot verwendet, dann können die genannten Reflektoren entweder auf räumlich unveränderlichen Gegen-ständen - wie z.B. einem Gebäude oder Zaun - oder auf räumlich veränderlichen Gegenständen - wie z.B. einem Pfosten oder Pylon - angebracht sein. Dem entsprechend können die Positions-Unsicherheiten der korrespondierenden Referenz-Punkten innerhalb der virtuellen Repräsentation klein sein, da die Reflektoren räumlich unveränderlich sind und daher eine hohe Konfidenz haben können, oder aber größer, da die Reflektoren an räumlich veränderlichen Positionen angeordnet sind, und damit eine geringere Konfidenz aufweisen können.

Zusätzlich zu der Beeinflussung der Positions-Unsicherheiten von Referenz-Punkten durch die räumliche Veränderlichkeit oder Unveränderlichkeit von Referenz-Markern kann aber auch die konkrete Ausgestaltung der Referenz-Marker Einfluss auf die einem Referenz-Punkt zugeordnete Konfidenz bzw. Positions-Unsicherheit nehmen, beispielsweise die Größe und Art des Markers, dessen Güte und dergleichen ähnliche Eigenschaften, die die Qualität der mittels des Detektionssystems ermittelten Richtungs-Informationen, also deren Richtungs-Unsicherheiten beeinflussen.

Beim erfindungsgemäßen Verfahren wird zunächst ermittelt, an welcher ersten Position sich das bewegliche Objekt im Raum befindet und hierauf basierend eine erste Positions-Information, die der ersten Position im wesentlichen entspricht, bestimmt. Erste Positionsinformationen können - typischerweise zu Beginn der Bezugsmodellerzeugung - entweder direkt in der virtuellen Repräsentation eingetragen sein, sie können aber auch mittels vorhergegangener Messungen bestimmt worden sein.

Insbesondere im letzteren Fall können die ersten Positionsinformationen mit ersten Orts-Unsicherheiten in jeder Dimension beaufschlagt sein - sofern diese berücksichtigt werden - da bei der Bestimmung der ersten Position aufgrund systematischer Fehler auf vielen Ebenen Unsicherheiten eingeführt werden können, wie sich auch aus der parallelen Patentanmeldung zur Positionsbestimmung eines beweglichen Objekts der gleichen Anmelderin ergibt.

Im Rahmen der Erfindung wird beim erfindungsgemäßen Verfahren davon ausgegangen, dass die Positionsbestimmung im Raum und hierauf aufbauend auch die Positions-Informationen innerhalb der virtuellen Repräsentation mit einer ersten Orts-Unsicherheit in wenigstens einer Dimension beaufschlagt ist, wobei diese erste Orts-Unsicherheit auch im Verlauf der nachfolgenden Verfahrensschritte - ebenso wie die Positions-Unsicherheiten der Referenz-Punkte - Berücksichtigung findet.

An der ersten Position im Raum verwendet das bewegliche Objekt nun ein mit diesem verbundenes Detektionssystem, um erste Richtungs-Information von einem oder mehreren Referenz-Markern im Raum zu erfassen, wobei die ersten Richtungs-Informationen bezogen sind auf eine vorgegebene Achse des beweglichen Objekts, beispielsweise dessen Längsachse. Das Detektionssystem kann aus einem oder aus mehreren Detektions-Subsystemen bestehen und ist bevorzugt unmittelbar an dem beweglichen Objekt angebracht.

Die im Zusammenhang mit der Erfindung eingesetzten Detektionssysteme sind auf die verwendeten Strahlungsarten, Wellenlängen und Reflektoren abgestimmt. So weist eine bevorzugte Ausführungsform des Detektionssystems als Sender mindestens eine Strahlungsquelle, bevorzugt eine kollimierte Lichtquelle, wie beispielsweise einen Laser oder einen Maser auf. Bevorzugt wird die Strahlung durch einen geeigneten Mechanismus, wie beispielsweise ein Scansystem oder ein System rotierender Reflektoren in wenigstens einer Ebene ausgefächert, so dass eine Detektion über einen vorgegebenen Raumwinkelbereich erzielbar ist. Weiterhin weist das Detektionssystem mindestens einen zur Strahlungsquelle korrespondierenden Strahlungssensor auf, der dazu eingerichtet ist, beispielsweise von einem Reflektor zurückreflektierte Strahlung der Strahlungsquelle zu detektieren. Das Detektionssystem ist dabei dazu eingerichtet, die Richtung der empfangenen Strahlung mit Bezug auf die vorgegebene Achse des beweglichen Objekts zu ermitteln, wobei die Richtung sowohl eine Azimut- als auch eine Elevationskomponenten umfassen kann.

Beispielsweise sind Strahlungsquelle und/oder Strahlungssensor auf einer in kontinuierliche Rotation versetzten Detektionskopf angeordnet, wobei der Detektionskopf mit einer Winkelmesseinrichtung direkt oder mittelbar verbunden ist, so dass die Stellung des Detektionskopfes zu jedem Zeitpunkt bestimmbar ist. Wird bei einem derartigen Detektionssystem das Licht von dem Reflektor eines Referenz-Markers reflektiert, dann wird durch die Winkelmesseinrichtung des Detektionssystems als Richtungs-Information der Winkel am Scheitel der Intensität des reflektierten Lichts, bezogen auf eine Achse des beweglichen Objekts, bestimmt. Bei Fahrzeugen erfolgt eine Rotation des Detektionskopfes, bevorzugt um die Gierachse des Fahrzeugs, beispielsweise mit einer Frequenz von 1 bis 100 Hz, bevorzugt mit einer Frequenz von 5 bis 70 Hz, weiter bevorzugt mit einer Frequenz von 10 bis 40 Hz, und besonders bevorzugt mit einer Frequenz um etwa 20 Hz.

Bei einer Weiterbildung des Detektionssystems kann die Rotation des Detektionskopfes um die Gierachse überdies mit einem Nicken überlagert werden, so dass aus Sicht des Detektionskopfes eine sinus- oder dreiecksförmige Abtastung der Umgebung erfolgt, wobei eine zur Winkelmesseinrichtung korrespondierende Elevationsmesseinrichtung vorgesehen sein kann, durch die das Detektionssystem als Richtungsinformation sowohl Azimut als auch Elevation der reflektierten Strahlung am Scheitel ihrer Intensität bezogen auf eine Achse des beweglichen Objekts bestimmen kann. In einer Ausführungsform ist dabei die Frequenz der Nickbewegung ein nichtganzzahliges Vielfaches der Frequenz der Rotationsbewegung, so dass im zeitlichen Verlauf ein in zumindest einem gewissen Maße lückenloses Abtasten eines Raumwinkelsegments durch das Detektionssystem erfolgt. Auf diese Weise können bei einem Fahrzeug auch Reflektoren außerhalb einer Detektionsebene erkannt werden. Bei einem in 3 Dimensionen beweglichen Objekt ist damit eine Lokalisierung von Reflektoren bezüglich einer Bezugsachse des Objekts in zumindest einem erheblichen Raumwinkelsegment oberhalb und/oder unterhalb des Objektes möglich.

In einer weiteren Ausführungsform ist das Detektionssystem auf einem anderen Objekt montiert, aber mit dem beweglichen Objekt bezugsfest verbunden. Hierbei ist das Detektionssystem mit dem beweglichen Objekt über eine Kommunikationsverbindung verknüpft.

Ebenso wie im Falle der zuvor beschriebenen Positionsbestimmung des beweglichen Objekts erfolgt auch die Erfassung der ersten Richtungs-Informationen in der Art, dass die ersten Richtungs-Informationen mit ersten Richtungs-Unsicherheiten beaufschlagt sind, also mit den ersten Richtungs-Informationen auch Informationen darüber erfasst/geliefert werden, die eine Aussage über die Konfidenz bzw. Exaktheit der erfassten ersten Richtungs-Informationen zulassen. Richtungs-Unsicherheiten können sich dabei beispielsweise aus der konkreten Wahl des Detektionssytems ergeben, beispielsweise aufgrund einer limitierten Winkelauflösung der Winkelmesseinrichtung(en), der gewählten Strahlungsart, der gewählten Referenz-Marker, insbesondere der Richtcharakteristik der Reflektoren, etc. Diese Unsicherheiten spiegeln sich zumindest teilweise in den detektierten Richtungs-Informationen wieder und werden mit den ersten Richtungs-Unsicherheiten erfasst und für das nachfolgende Verfahren zur Weiterverarbeitung zur Verfügung gestellt.

Beim erfindungsgemäßen Verfahren erfolgt nun eine Bewegung des beweglichen Objekts von der ersten Position im Raum zu einer zweiten Position im Raum, wobei die zweite Position im Raum eine bekannte, vorzugsweise vorgegebene Wegstrecke von der ersten Position entfernt ist. Das Bewegen des beweglichen Objekts kann dabei vorzugsweise mittels wenigstens einer Antriebseinrichtung, die Teil des beweglichen Objekts ist, erfolgen. Beispielsweise können beim Bewegen des beweglichen Objekts im Falle eines Fahrzeugs motorgetriebene Ketten- oder Radantriebe zur Anwendung kommen oder aber, im Fall von Flugobjekten, Propeller- oder Strahlantriebe.

Insbesondere ist vorgesehen, dass die Wegstrecke, entlang derer sich das bewegliche Objekt bewegt, aufgrund einer vorzugsweise mit dem beweglichen Objekt verbundenen Steuerungseinrichtung durch die hierdurch gesteuerte Ausgabe von Antriebsparametern für die Antriebseinheit zurückgelegt wird. Dabei können die Steuerungsparameter fest in der Steuerungsvorrichtung vorgegeben sein, zum Beispiel um innerhalb eines Initialisierungsprozesses eine vorgegebene Strecke zurück zu legen, oder aber die Steuerung kann aufgrund von Benutzereingaben erfolgen, mittels derer das bewegliche Objekt (während die Verfahrensschritte des erfindungsgemäßen Verfahrens kontinuierlich und wiederholt abgearbeitet werden) innerhalb des Raums durch den Benutzer kontrolliert fortbewegt wird.

Vorteilhaft kann es dabei sein, wenn der zurück gelegte Weg während der Bewegung beispielswiese durch ein Aufzeichnen von Antriebsparametern, Beschleunigungen, Geschwindigkeiten und dergleichen zumindest teilweise reproduzierbar ist, so dass hieraus, gegebenenfalls auch unter Berücksichtigung weiterer Einflüsse wie Drift, Traktion, Reibung und dergleichen, die Wegstrecke zwischen erster und zweiter Position bestimmbar ist.

Auch für diese zweite Position im Raum gibt es natürlich eine Entsprechung in der virtuellen Repräsentation, die, an eben dieser zweiten Position, mittels einer zur Positionsbestimmung an der ersten Position korrespondierenden Positionsbestimmung bestimmt wird. Es erfolgt also die Bestimmung von zweiten Positions-Informationen für das bewegliche Objekt innerhalb der virtuellen Repräsentation, die der zweiten Position im Raum im Wesentlichen entsprechen, und wobei die zweiten Positions-Informationen mit zweiten Orts-Unsicherheiten in wenigstens einer Dimension beaufschlagt sind.

Zur Vermeidung von Wiederholungen sei an dieser Stelle auf die oben stehenden Ausführungen bezüglich der Bestimmung der ersten Positions-Informationen verwiesen, die auf die Bestimmung der zweiten Positions-Informationen gleichsam anwendbar sind.

Aufgrund der Bestimmung der zweiten Positions-Informationen nebst deren zweiten Orts-Unsicherheiten in Verbindung mit den zuvor bestimmten ersten Positions-Informationen nebst ersten Orts-Unsicherheiten ist es zudem auch möglich, die zwischen erster und zweiter Position zurück gelegte Wegstrecke zu bestimmen, so dass sich die Bekanntheit der zurück gelegten Wegstrecke aus der Differenz der ersten und zweiten Positions-Informationen ergibt.

Hiernach werden, an der zweiten Position, durch das mit dem beweglichen Objekt verbundene Detektionssystem zweite Richtungs-Informationen von dem einem oder mehreren Referenz-Markern im Raum erfasst, wobei diese zweiten Richtungs-Informationen ebenfalls bezogen auf eine Achse des beweglichen Objekts sind und mit zweiten Richtungs-Unsicherheiten beaufschlagt sind.

Dabei gelten die obigen Erläuterungen zur Erfassung von ersten Richtungs-Informationen mit ersten Richtungs-Unsicherheiten analog und es sei auch hier zur Vermeidung von Wiederholungen auf die vorstehenden Ausführungen zur Erfassung von ersten Richtungs-Informationen mit ersten Richtungs-Unsicherheiten verwiesen.

Nach der Erfassung der ersten und zweiten Richtungs-Informationen werden beispielsweise auf der Grundlage der Kenntnis der zurückgelegten Wegstrecke und der beiden Richtungs-Informationserfassungen diejenigen Referenz-Marker identifiziert, zu denen die ersten und zweiten Richtungs-Informationen jeweils eindeutig zuordenbar sind, das heißt, die jeweils eine eindeutige Unterscheidbarkeit einzelner Referenz-Marker erlauben.

Dabei können aus den detektierten Signalen der ersten und zweiten Richtungs-Informationen grundsätzlich diejenigen als verwendbar ausgewählt werden, die auf Grund ihrer Richtungs-Informationen durch das Detektionssystem eindeutig unterscheidbar sind. Eindeutig unterscheidbar sind dabei solche Signale, deren Richtungs-Informationen, vom Detektionssystem aus gesehen, derart unterschiedliche Winkel aufweisen, dass sie eindeutig einem bestimmten Referenz-Marker zugeordnet werden können - gegebenenfalls unter Zuhilfenahme von Informationen zu Referenz-Punkten aus der virtuellen Repräsentation. Da jede der erfassten Richtungs-Informationen mit Richtungs-Unsicherheiten beaufschlagt ist, können solche Referenz-Marker aber möglicherweise nicht eindeutig aufgelöst werden, die - von der ersten oder von der zweiten Position im Raum aus gesehen - entweder auf einer Line liegen, oder die sich im Überlappungsbereich der genannten Richtungs-Unsicherheiten befinden.

Auf der Grundlage derzweiten oder ersten Richtungs-Informationen und beispielsweise deren Signal-Sequenz bei rotierenden Detektionssystemen, oder auch den zu Referenz-Markern korrespondierenden in der virtuellen Repräsentation gespeicherten Referenz-Punkten, ist es unter Berücksichtigung der bekannten Wegstrecke möglich, abzugleichen, ob und inwieweit die ersten oder zweiten Richtungs-Informationen (gegebenenfalls auch in Verbindung mit deren Signal-Sequenz) von denselben Referenz-Marker stammen.

Bei dem Schritt der Identifikation von Referenz-Markern sind insbesondere die ersten und zweiten Richtungs-Unsicherheiten relevant, die beispielsweise dazu führen können, dass Signale mehrerer Referenz-Marker aus demselben Winkelbereich, d.h. aus einem Raumwinkelsegment empfangen werden, das kleiner als die jeweilige Richtungs-Unsicherheit für die Detektion ist. Ist dies der Fall, kann gegebenenfalls durch Analyse der Signalsequenz - soweit diese Information verfügbar ist - oder aber mit Hilfe der Informationen Positionen der Referenz-Punkte innerhalb der virtuellen Repräsentation noch eine Aussage getroffen werden, welches der Signale von welchem Referenz-Marker stammt; sofern diese aber nicht der Fall ist, sind einige Referenz-Marker nicht eindeutig identifizierbar und die aus diesem Raumwinkelsegment stammenden Signale (sowie gegebenenfalls die hierzu korrespondierenden Signale der jeweils anderen Richtungs-Informationen) müssen verworfen werden.

In folge des Identifikationsschritts stehen die ersten und zweiten Richtungs-Informationen lediglich der Referenz-Marker für die weiteren Verfahrensschritte zur Verfügung für die beide Richtungs-Informationen zu jeweils denselben Referenz-Markern eindeutig zuordenbar sind.

Die so identifizierten ersten und zweiten Richtungs-Informationen werden nun dazu verwendet, die Positionen von Referenz-Punkten innerhalb der virtuellen Repräsentation für jeden identifizierten Referenz-Marker zu berechnen, und zwar auf der Basis der ersten und/oder der zweiten Richtungs-Informationen und der ersten bzw. zweiten Positions-Information.

Dazu wird in einer Ausführungsform der Erfindung für jeden Referenz-Marker in der virtuellen Repräsentation ein Schnittpunkt von anhand der ersten und der zweiten Richtungs-Informationen gebildeten Geraden durch jeweils den ersten bzw. zweiten durch die Positions-Information in der virtuellen Repräsentation definierten Punkt gebildet oder konstruiert. Dieser Schnittpunkt stellt dann den zu dem jeweiligen Referenz-Marker korrespondierenden Referenz-Punkt innerhalb dervirtuellen Repräsentation dar.

Diese Ausführungsform ist besonders geeignet für den Vorgang der Erstellung einer virtuellen Repräsentation bzw. für Fälle in denen ein dynamisches Zufügen von Referenz-Markern erfolgt, für die dann, nach einer entsprechenden Verarbeitung durch das erfindungsgemäße Verfahren Referenz-Punkte erstmalig berechnet werden. Selbstverständlich kann diese Ausführungsform aber auch im kontinuierlichen Verlauf der Anwendung des erfindungsgemäßen Verfahrens zur Aktualisierung von Referenz-Punkten heran gezogen werden.

In einer weiteren Ausführungsform wird fürjeden Referenz-Marker zu dem ein korrespondierender Referenz-Punkt in der virtuellen Repräsentation existiert ein Schnittpunkt einer anhand der ersten oder derzweiten Richtungs-Informationen gebildeten Geraden durch jeweils den ersten bzw. zweiten durch die Positions-Information in der virtuellen Repräsentation definierten Punkt mit einem hierauf vom jeweils entsprechenden gespeicherten Referenz-Punkt gefällten Lot gebildet oder konstruiert. Dieser Schnittpunkt stellt dann ebenfalls den zu dem jeweiligen Referenz-Marker korrespondierenden Referenz-Punkt innerhalb der virtuellen Repräsentation dar.

An dieser Stelle sei erwähnt, dass das erfindungsgemäße Verfahren durch die unterschiedlichen Arten der Berechnung der Referenz-Punkte auch stark adaptiv ist, insbesondere für Fälle, in denen Referenz-Marker erkannt werden, für die in der virtuellen Repräsentation noch keine entsprechender Referenz-Punkt existiert. Gleichsam kann, wenn solch ein zu einem Referenz-Marker korrespondierender Referenz-Punkt vorliegt, die Berechnung des berechneten Referenz-Punkts auf der Grundlage einer der beiden vorstehenden Ausführungsformen erfolgen, aber auch redundant durch beide Ausführungsformen. Das bessere der beiden Ergebnisse könnte dann für die Weiterverarbeitung heran gezogen werden.

Bei den vorstehenden Ausführungsformen sind, wie oben dargestellt, sowohl die ersten und die zweiten Positions-Informationen als auch die ersten und die zweiten Richtungs-Informationen mit ersten und zweiten Orts-Unsicherheiten bzw. ersten und zweiten Richtungs-Unsicherheiten beaufschlagt. Daherwird auch im Rahmen der Berechnung der Position jedes Referenz-Punkts eine Fehlerberechnung durchgeführt und das Ergebnis dieser Fehlerrechnung als Positions-Unsicherheit, mit der die Positions-Information des berechneten Referenz-Punkts in zumindest einer Dimension beaufschlagt ist, angegeben.

Die Fehlerberechnung erfolgt dabei bevorzugt mittels einer Fehlerfortpflanzung, bevorzugt auf der Grundlage des Gauß'schen Fehlerfortpflanzungsgesetzes, ausgehend von den ersten und zweiten Orts-Unsicherheiten und den ersten und zweiten Richtungs-Unsicherheiten, und gegebenenfalls auch unter Berücksichtigung weiterer bekannter Fehler.

Die so berechneten Referenz-Punkte mit deren Positions-Unsicherheiten, innerhalb der virtuellen Repräsentation, korrespondieren dann mit den Positionen der Referenz-Marker im Raum, allerdings nur solchen, die auch identifiziert werden konnten, also für die eindeutig zuordenbare erste und zweite Richtungs-Informationen ermittelt werden konnten.

In einem nächsten Schritt des erfindungsgemäßen Verfahrens werden die berechneten Positionen jedes der berechneten Referenz-Punkte vorzugsweise zusammen aber zumindest in Verbindung mit den errechneten Positions-Unsicherheiten in einem zweiten Speicher gespeichert. Dieser Speicher kann eine Festplatte sein, ein Flash-Speicher, ein SRAM- oder ein DRAM-Speicher, eine Kombination aus diesen Speichertypen oder ein andererwiederbeschreibbarer Speicher, wobei das bewegliche Objekt bzw. dessen Datenverarbeitungseinrichtung, innerhalb derer das erfindungsgemäße Verfahren bevorzugt abläuft, mittelbaren oder unmittelbar Zugriff auf den zweiten Speicher haben sollte.

Der zweite Speicher dient für das erfindungsgemäße Verfahren als eine Art Zwischenspeicher, in den die Ergebnisse der jeweils letzten Berechnung oder Berechnungen zumindest vorübergehend gespeichert werden. Der erste Speicher enthält demgegenüber die zu Beginn des Verfahrens jeweils "gültige" virtuelle Repräsentation mit den hierin gespeicherten Referenz-Punkten die entweder durch einen vorhergehenden Ablauf des erfindungsgemäßen Verfahrens, oder einer Ausführungsform hiervon, in den ersten Speicher geschrieben wurden oder aber als Initialisierungs-Wert in diesem vorliegen. Diese jeweils "gültige" virtuelle Repräsentation dient im Rahmen des Ablaufs des erfindungsgemäßen Verfahrens dann dem beweglichen Objekt zur Bestimmung seiner ersten und zweiten Position bzw. hierauf basierend der ersten und zweiten Positions-Informationen.

Nach der Speicherung der berechneten Referenz-Punkte in dem zweiten Speicher erfolgt dann ein Vergleich der Position jedes berechneten Referenz-Punkts und dessen Positions-Unsicherheiten mit der Position seines korrespondierenden, im ersten Speicher innerhalb der virtuellen Repräsentation gespeicherten Referenz-Punkts und dessen Positions-Unsicherheiten.

Eine Korrespondenz zwischen berechneten und gespeicherten Referenz-Punkten kann dabei auf verschiedene Weisen hergestellt bzw. ermittelt werden, beispielsweise durch einen Vergleich der Positions-Informationen und deren Positions-Unsicherheiten - wie weiter unten auch noch im Detail ausgeführt werden wird - oder aber alternativ oder auch ergänzend hierzu durch eine Signierung von ermittelten ersten und zweiten Richtungs-Informationen anhand der innerhalb der virtuellen Repräsentation gespeicherten Referenz-Punkte und dem hiermit bekannten Raumwinkelbereich, innerhalb dessen ein Signal im Rahmen der Detektion der Referenz-Marker für den jeweiligen Marker erwartet wird. Eine derartige Signatur kann als zusätzlicher Parameter mit der ersten und/oder zweiten Richtungs-Information verknüpft werden und in Verbindung damit auch gespeichert und im Rahmen der weiteren Verfahrensschritte verarbeitet werden.

Das erfindungsgemäße Verfahren hat den Vorteil, dass im Rahmen der Nutzung der virtuellen Repräsentation oder hiermit gespeicherte Informationen für die Positionsbestimmung bzw. die Navigation des beweglichen Objekts eine gleichzeitige Erzeugung oder Aktualisierung von innerhalb der virtuellen Repräsentation gespeicherten Informationen erfolgen kann, so dass sowohl auf dynamische Veränderungen von äußeren Gegebenheiten, wie zum Beispiel ein Bewegen von Referenz-Markern im Raum reagiert wird und diese innerhalb kurzer Zeit in der virtuellen Repräsentation abgebildet werden, als auch die zuvor übliche Trennung von Erstellungsprozess und Nutzung einer virtuellen Repräsentation verwischt und beides durch dasselbe bewegliche Objekt erfolgt, und zwar während sich dieses innerhalb des Raums bewegt, der durch die virtuelle Repräsentation beschrieben wird.

Schließlich erlaubt es das erfindungsgemäße Verfahren auch, Referenz-Markern vermittels der Positions-Unsicherheiten der mit den korrespondierenden in der virtuellen Repräsentation gespeicherten Referenz-Punkte eine Güteinformation zuzuordnen, diese also beispielsweise als genau oder zeitlich und räumlich unveränderlich aber alternativ auch ungenau, also zeitlich und/oder räumlich veränderlich zu kennzeichnen.

Hierdurch kann sicher gestellt werden, dass bei einem beweglichen Objekt, welches solche ungenauen Referenz-Marker zur Navigation verwendet, nicht fälschlicherweise von einer genauen Positionsbestimmung ausgegangen wird, sondern über die Fehlerfortpflanzung bei der Positionsbestimmung auch sicher gestellt ist, dass die Orts-Unsicherheiten des beweglichen Objekts bekannt sind und in Folge dessen die Navigation auch fehlerbehaftet ist.

In einer Ausführungsform des erfindungsgemäßen Verfahrens erfolgt nach dem Vergleich der Position jedes berechneten Referenz-Punkts und dessen Positions-Unsicherheiten mit der Position seines korrespondierenden, im ersten Speicher innerhalb der virtuellen Repräsentation gespeicherten Referenz-Punkts und dessen Positions-Unsicherheiten ein Speichern der Position des berechneten Referenz-Punkts und dessen Positions-Unsicherheiten in dem ersten Speicher anstelle des korrespondierenden gespeicherten Referenz-Punkts und dessen Positions-Unsicherheiten, wenn der Vergleich ergibt, dass sich die Position des gespeicherten Referenz-Punkts mit dessen gespeicherten Positions-Unsicherheiten und die Position des berechneten Referenz-Punkts mit dessen Positions-Unsicherheiten in wenigstens einer Dimension überlappen, und wenn die berechneten Positions-Unsicherheiten des berechneten Referenz-Punkts geringer sind als die gespeicherten Positions-Unsicherheiten des gespeicherten Referenz-Punkts.

Bei dieser Ausführungsform wird also zunächst festgestellt, ob zum einen die berechneten Positions-Unsicherheiten des berechneten Referenz-Punkts geringer sind, als die Positions-Unsicherheiten eines gespeicherten Referenzpunkts, die "Güte" des berechneten Referenz-Punkts als höher ist, als die des gespeicherten Referenz-Punkts, wenn die durch die beiden Punkte, also der gespeicherte und der berechnete Punkt, und deren Positions-Unsicherheiten abgedeckten Wertebereiche innerhalb der virtuellen Repräsentation sich zumindest in einer Dimension überlappen.

Stellt man sich einen Referenz-Punt mit dessen Positions-Unsicherheiten innerhalb eines zweidimensionalen kartesischen Koordinatensystems bildlich als Viereck (definiert durch die Unsicherheiten in beiden Dimensionen) um einen zentralen Punkt (den Referenz-Punkt) vor, so erfolgt ein Speichern des berechneten Referenz-Punkts mit dessen Positions-Unsicherheiten anstelle des in der virtuellen Repräsentation gespeicherten Referenz-Punkts mit dessen Positions-Unsicherheiten dann, wenn die Vierecke sich in zumindest einem Punkt überlappen und zudem das Viereck des berechneten Referenz-Punkts kleiner als das des gespeicherten ist.

Es kann also, wie vorstehend erläutert, für jeden gespeicherten Referenz-Punkt ein Vergleich zwischen den Eintragungen im ersten Speicher und denen im zweiten Speicher durchgeführt werden, wobei angenommen werden kann, dass es sich bei den jeweils verglichenen Punkten um solche handelt, die denselben Referenz-Marker betreffen, wenn sich dabei ein Referenz-Punkt im ersten Speicher (oder dessen Positions-Unsicherheiten) mit einem Referenz-Punkt im zweiten Speicher (bzw. dessen Positions-Unsicherheiten) in zumindest einer Dimension überlappt. Als Überlappung wird dabei, wie bereits erwähnt angesehen, wenn sich der Wertebereich einer Position des gespeicherten Referenz-Punkts mit dessen Positions-Unsicherheiten (im ersten Speicher) wenigstens teilweise mit dem Wertebereich einer Position eines berechneten Referenz-Punkts mit dessen Positions-Unsicherheiten (im zweiten Speicher) überschneidet.

Ist dies der Fall, dann lieferte die neueste Erfassung und Berechnung eines Referenz-Punkts offenbar eine genauere Entsprechung der Position eines Referenz-Markers im Raum als sie in der "gültigen" Fassung der virtuellen Repräsentation im ersten Speicher gespeichert ist. In diesem Fall kann die Position des berechneten Referenz-Punkts mit dessen Positions-Unsicherheiten aus dem zweiten Speicher in den ersten Speicher eingetragen werden.

Diese Ausführungsform führt also ein kontinuierliches Eintragen von verbesserten Werten für Positions-Informationen und Positions-Unsicherheiten von Referenz-Punkten in die virtuelle Repräsentation durch, bis die Qualität derjeweiligen Werte ihr Maximum erreicht hat und damit die "Güte" der Referenz-Punkte bzw. deren entsprechender Referenz-Marker konvergiert.

In einer weiteren Ausführungsform des erfindungsgemäßen Verfahrens erfolgt auf der Grundlage der Position des gespeicherten Referenz-Punkts und dessen gespeicherten Positions-Unsicherheiten und der Position des berechneten Referenz-Punkts und dessen berechneten Positions-Unsicherheiten die Berechnung einer Position eines optimierten Referenz-Punkts mit optimierten Positions-Unsicherheiten, und hiernach ein speichern der Position des optimierten Referenz-Punkts und dessen Positions-Unsicherheiten in dem ersten Speicher anstelle des der Berechnung zugrunde liegenden gespeicherten Referenz-Punkts und dessen Positions-Unsicherheiten.

Bei dieser Ausführungsform wird vor der Speicherung bzw. Ersetzung eines gespeicherten Referenz-Punkts in der virtuellen Repräsentation bzw. dem ersten Speicher eine optimierte Position des Referenz-Punkts nebst optimierter Positions-Unsicherheiten erzeugt. Das geschieht bevorzugt in der Weise, dass zunächst aus der Position des gespeicherten Referenz-Punkts und dessen gespeicherten Positions-Unsicherheiten sowie aus der Position des berechneten Referenz-Punkts und dessen berechneten Positions-Unsicherheiten eine Position eines optimierten Referenz-Punkts mit optimierten Positions-Unsicherheiten gebildet wird.

Für die Berechnung eines solchen optimierten Referenz-Punkts sind eine Reihe von Verfahren möglich. So kann beispielsweise als optimierten Referenz-Punkt ein Wert bzw. eine Position berechnet werden, die sowohl den Wert bzw. die Position des gespeicherten Referenzpunkts als auch die des berechneten Referenz-Punkts, bevorzugt jeweils mit deren Positions-Unsicherheiten, berücksichtigt. Im einfachsten Fall kann der optimierte Referenz-Punkt einen Mittelwert zwischen gespeichertem und berechnetem Referenz-Punkt annehmen und gegebenenfalls die zugehörige optimierte Positions-Unsicherheit ebenfalls einen Mittelwert zwischen gespeicherter und berechneter Positions-Unsicherheit.

In einer Weiterbildung wird basierend auf den Positions-Unsicherheiten, also der gespeicherten und der berechneten Positions-Unsicherheit ein gewichtetes Mittel zwischen der Position des gespeicherten und des berechneten Referenz-Punkt ermittelt und dieser als optimierter Referenz-Punkt bestimmt. In ähnlicher Weise ergibt sich aufgrund des gewichteten Mittels auch ein Wert für die optimierte Positions-Unsicherheit.

Dabei erfolgt die Bildung des Mittels unter Berücksichtigung einer Wichtung, basierend auf den Positions-Unsicherheiten der gespeicherten Position und der berechneten Position des Referenz-Punkts, und zwar in der Weise, dass der optimierte Referenz-Punkt näher an der Referenz-Punkt-Position mit den geringeren Positions-Unsicherheiten liegt. Auf diese Weise wird gewährleistet, dass das erfindungsgemäße Verfahren Werte mit geringen Unsicherheiten stärker berücksichtig als solche mit großen Unsicherheiten, also Werte mit großen Unsicherheiten weniger starken Einfluss auf das Ergebnis nehmen - aber dennoch nicht unberücksichtigt bleiben - als solche mit geringen Unsicherheiten. Die so optimierte Position des Referenz-Punkts sowie dessen Positions-Unsicherheiten stellen dann häufig eine verbesserte Näherung der Position des zum Referenz-Punkt korrespondierenden Referenz-Markers dar.

In einer weiteren Ausführungsform des erfindungsgemäßen Verfahrens wird, wenn ein neuer Referenz-Marker im Raum erfasst wird, zu dem kein korrespondierender Referenz-Punkt in der virtuellen Repräsentation vorliegt, die Position eines berechneten Referenz-Punkts und dessen Positions-Unsicherheiten in dervirtuellen Repräsentation bzw. dem ersten Speicher gespeichert, wenn die Position des berechneten Referenz-Punkts mit dessen Positions-Unsicherheiten mit der Position keines gespeicherten Referenz-Punkts mit dessen Positions-Unsicherheiten überlappt. Ein Überlappen des berechneten Referenz-Punkts mit dessen Positions-Unsicherheiten mit der Position keines gespeicherten Referenz-Punkts mit dessen Positions-Unsicherheiten in diesem Sinne entspricht dabei dem weiter oben beschriebenen Überlappen, so dass an dieser Stelle zur Vermeidung von Wiederholungen auf das oben stehende verwiesen wird, was hier entsprechende Anwendung findet.

Auf diese Weise erfolgt ein dynamisches Zufügen von Referenz-Punkten zur virtuellen Repräsentation, und zwar dann, wenn ein Referenz-Punkt ermittelt wird, zu dem kein korrespondierender Referenz-Punkt bereits in der virtuellen Repräsentation vorhanden ist. Auch dieser Schritt unterstreicht die Dynamik und Flexibilität des erfindungsgemäßen Verfahrens, dass im Zuge der Benutzung der virtuellen Repräsentation fortwährend Aktualisierungen oder Ergänzungen derselben vornimmt.

In einer weiteren Ausführungsform des erfindungsgemäßen Verfahrens erfolgt in ähnlicherWeise das Vorbereiten des Entfernens eines Referenz-Punkts aus der virtuellen Repräsentation, wenn das Entfernen eines Referenz-Markers im Raum ermittelt wird. Hiernach erfolgt ein Attributieren zum Löschen der Position eines gespeicherten Referenz-Punkts mit dessen Positions-Unsicherheiten wenn die Position des gespeicherten Referenz-Punkts mit dessen Positions-Unsicherheiten mit der Position keines berechneten Referenz-Punkts mit dessen Positions-Unsicherheiten überlappt.

Ist diese Voraussetzung erfüllt kann mit einer gewissen Wahrscheinlichkeit davon ausgegangen werden, dass ein Referenz-Marker im Raum entfernt (oder repositioniert) wurde und damit ein Löschen des entsprechenden Referenz-Punkts mit dessen Positions-Unsicherheit vorbereitet werden, wenn sich dieses Ergebnis bestätigt, oder aber der Referenz-Punkt mit dessen Positions-Unsicherheit unmittelbar aus der virtuellen Repräsentation gelöscht werden.

Auch hierdurch erfolgt ein dynamisches Anpassen der virtuellen Repräsentation an die im Raum vorgefundenen Gegebenheiten, so dass nicht mehr länger vorhandene Referenz-Marker aus der virtuellen Repräsentation eliminiert werden. Dieser Schritt unterstreicht nochmals die Dynamik und Flexibilität des erfindungsgemäßen Verfahrens, dass im Zuge der Benutzung der virtuellen Repräsentation fortwährend Anpassungen derselben an die räumlichen Gegebenheiten, die diese beschreibt, vornimmt.

In einer bevorzugten Ausführungsform der Erfindung werden zumindest einige der bisher beschriebenen Verfahrensschritte in vorbestimmten zeitlichen oder räumlichen Abständen wiederholt. Bei dieser Ausführungsform werden die Verfahrensschritte periodisch oder aperiodisch wiederholt, wobei es - insbesondere bei Verwendung eines beweglichen Objekts zur Erfassung der Referenz-Punkte - besonders vorteilhaft, die Schritte des Erfassens und des Berechnens wiederholt auszuführen, weil damit die Genauigkeit der Bestimmung der Referenz-Punkte in den meisten Fällen verbessert werden kann, beispielsweise weil sich in anderen Messpositionen günstigere Winkel zur Erfassung verschiedener Referenz-Marker und hierauf basierend auch der Berechnung der Referenz-Punkte ergeben können.

Bei einer solchen Ausführungsform der vorliegenden Erfindung, bei welcher eine kontinuierliche Berechnung von Referenz-Punkten innerhalb der virtuellen Repräsentation erfolgt ist es zudem möglich, dass die im Rahmen der wiederholten Abarbeitung der Verfahrensschritte erfassten Richtungs-Informationen der identifizierten Referenz-Marker in einer weiteren Speichereinrichtung zwischengespeichert werden. Für den Fall einer periodischen Wiederholung der Verfahrensschritte in relativ kurzen zeitlichen Abständen ergibt sich damit ein Datensatz, welcher im wesentlichen sich kontinuierlich fortentwickelnde Werte für die jedem einzelnen Referenz-Marker zugeordneten Richtungs-Informationen aufweist.

Dieser Datensatz erlaubt es, eine prädiktive Vorhersage für die zukünftige Entwicklung der Richtungs-Informationen fürjeden Referenz-Marker vorzunehmen, beispielsweise durch Extrapolation, wobei die Vorhersagegenauigkeit von einer Vielzahl von Parametern abhängt und mit zunehmendem in die Zukunft gerichteten Zeitintervall abnimmt.

Eine derartige prädiktive Vorhersage der Entwicklung der Richtungs-Information für sämtliche Referenz-Marker kann in einer Weiterbildung dieser Ausführungsform auch Im Rahmen der Identifizierung von Referenz-Markern Verwendung finden, indem ein Abgleich oder eine Verarbeitung der ermittelten Richtungs-Informationen mit den prädiktiv vorhergesagten Richtungs-Informationen stattfinden kann und hiermit schlecht aufgelöste oder für sich genommen nicht eindeutig zuordenbare Richtungs-Informationen dennoch eine Identifizierung von Referenz-Markern erlauben können.

Die Wiederholung der erfindungsgemäßen Verfahrensschritte kann auch, wie nachfolgend beschrieben, vorteilhaft beim Hinzufügen oder Löschen von Referenz-Punkten in der virtuellen Repräsentation eingesetzt sein.

Bei einer Weiterbildung des erfindungsgemäßen Verfahrens wird die Position eines berechneten Referenz-Punkts und dessen Positions-Unsicherheiten erste dann in der virtuellen Repräsentation gespeichert, wenn die Position des berechneten Referenz-Punkts mit dessen Positions-Unsicherheiten mit der Position keines gespeicherten Referenz-Punkts mit dessen Positions-Unsicherheiten bei wenigstens zwei aufeinanderfolgenden Wiederholungen der erfindungsgemäßen Verfahrensschritte und vorzugsweise bei fünf aufeinander folgenden Wiederholungen der erfindungsgemäßen Verfahrensschritte überlappt.

Ein Referenz-Punkt wird also erst dann als neuer Referenz-Punkt in den ersten Speicher eingetragen, nachdem er mehrmals hintereinander, bevorzugt 5 mal, bestimmt wurde. Ein Vorteil dieser Ausführungsform besteht in einer größeren Robustheit gegenüber Artefakten, die fälschlicherweise als Referenz-Punkt erfasst wurden. Diese erhöhte Robustheit kann in einerweiteren Ausführungsform auch in einer solchen Weise weiterentwickelt werden, dass das Signal von einem Referenz-Marker mehrmals erfasst wird, bevor es in dem zweiten Speicher gespeichert oder zwischengespeichert wird.

Bei wiederum einer weiteren Weiterbildung findet das Löschen der Position eines gespeicherten Referenz-Punkts und dessen Positions-Unsicherheiten erst dann statt, wenn eine Attributierung desselben gespeicherten Referenz-Punkts mit dessen Positions-Unsicherheiten bei wenigstens zwei aufeinanderfolgenden Wiederholungen der erfindungsgemäßen Verfahrensschritte und vorzugsweise bei fünf aufeinander folgenden Wiederholungen erfolgt ist.

Dabei wird ein Referenz-Punkt zunächst - wie oben erläutert - zum Löschen attribuiert. Bei einer mehrfachen Attribuierung, bevorzugt wenn derselbe Referenz-Punkt 5 mal zum Löschen attribuiert wurde, wird der Referenz-Punkt dann aus der virtuellen Repräsentation oder dem ersten Speicher gelöscht. Damit wird dem Umstand Rechnung getragen, dass die Erfassung der Referenz-Marker durch ein bewegliches Objekt stattfindet, wobei können kurzzeitige Störungen - z.B. eine kurzzeitige Verdeckung von Referenz-Markern - bei der Erfassung auftreten können, ohne dass der entsprechende Referenz-Marker tatsächlich entfernt wurde.

So können Bäume, herunterhängende Zweige, bewegte Personen oder Tiere die Erfassung für kurze Zeit oder für einen bestimmten räumlichen Abschnitt beeinträchtigen. Sobald der Referenz-Marker vom bewegliche Objekt wieder erfasst werden kann, ist es vorteilhaft, den bereits gespeicherten entsprechenden Referenz-Punkt in der virtuellen Repräsentation - zusammen mit den Positions-Unsicherheiten - wieder zu verwenden und damit die Möglichkeit zu haben, einen Referenz-Punkt mit typischerweise geringeren Positions-Unsicherheiten zu verwenden als wenn dieser erstmals in die virtuelle Repräsentation eingetragen wird.

In einer weiteren Ausführungsform kann für einen oder mehrere der im ersten Speicher gespeicherten Referenz-Punkte ein Attribut vorgesehen sein, das die Positionsinformationen dieser Referenz-Punkte als unveränderlich und insbesondere nicht löschbar kennzeichnet. Ein derartiges Attribut ist besonders vorteilhaft, um beispielsweise räumlich unveränderliche Referenz-Markerzu kennzeichnen.

Wie oben bereits beschrieben werden bei einer erfindungsgemäßen Ausführungsform Referenz-Marker dann nicht identifiziert, wenn wenigstens eine erfasste Richtungs-Information in Folge der gespeicherten Positions-Unsicherheiten, die dem zu dem Referenz-Marker korrespondierenden Referenz-Punkt zugeordneten sind, zu mehr als einem Referenz-Marker gehören kann.

Es können daher bei einer Ausführungsform der Erfindung bei der Ermittlung der Richtungs-Informationen auf Basis der gespeicherten Positions-Unsicherheiten Winkelsegmente bzw. Raumwinkelsegmente ermittelt werden, innerhalb derer die Signale mehrerer Referenz-Marker bei der Bestimmung der Richtungsinformationen als nicht-eindeutig klassifiziert werden und entsprechend in Folge des Schritts der Identifizierung von Referenz-Markern für die nachfolgende Berechnung unberücksichtigt bleiben.

Wenn also zwei oder mehr Referenz-Marker, vom beweglichen Objekt aus gesehen, in einer ähnlichen Richtung liegen und sich die Fehlergrenzen der Richtungs-Unsicherheiten der ermittelten Richtungs-Informationen (auf Basis der gespeicherten Positions-Unsicherheiten, aber auch aufgrund von Messfehlern, endlicher Reflektorgröße, etc.) überlappen, dann können Richtungs-Informationen, die innerhalb dieses Überlappungsbereichs liegen als nicht unterscheidungskräftig angesehen werden, insoweit als dass diese Richtungs-Informationen eine klare Aussage, welchem Referenz-Marker das empfangene Signal zuzuordnen ist, nicht erlauben.

In einer weiteren erfindungsgemäßen Ausführungsform ist wenigstens ein gespeicherter Referenz-Punkt in der virtuellen Repräsentation, korrespondierend zu wenigstens einem vordefinierten Referenz-Marker im Raum hinsichtlich seiner gespeicherten Position und, optional, seiner gespeicherten Positions-Unsicherheit definiert, und, optional, als unveränderlich attribuiert.

Bestimmte Referenz-Punkte können damit so in der virtuellen Repräsentation gespeichert sein, dass ihre Position (und gegebenenfalls auch ihre Positions-Unsicherheit) in der virtuellen Repräsentation definiert ist, und zwar in einer solchen Weise, dass ihrer Position korrespondierend ein vordefinierter Referenz-Marker im Raum zugeordnet ist.

Insbesondere zu Beginn des erfindungsgemäßen Verfahrens kann sich das bewegliche Objekt beispielsweise in einer Art Garage oder einer anderen definierten Ausgangsposition befinden. Dabei wird angenommen, dass diese Garage während des weiteren Verfahrens nicht oder nicht wesentlich bewegt wird. Referenz-Marker, die auf einer derartigen Garage angebracht sind, können also als mit sehr geringen Positions-Unsicherheiten attribuiert angesehen werden. Daher ist es möglich, dass Referenz-Marker an dieser Garage bei der Initialisierung nicht mehr durch Erfassen der Richtungs-Information und Berechnen derjeweiligen Positionen in die virtuellen Repräsentation eingetragen werden, sondern es können - beispielsweise zu Beginn des erfindungsgemäßen Verfahrens - diesen Referenz-Markern im Raum vordefinierte Referenz-Punkte in der virtuellen Repräsentation unmittelbar zugeordnet werden.

Die Positions-Unsicherheiten dieser Referenz-Punkte können ebenfalls definiert sein. Insbesondere können diese Positions-Unsicherheiten sehr gering sein, sie können insbesondere sogar, da von der Unveränderlichkeit der Referenz-Marker ausgegangen wird, zu Null gewählt werden. Bevorzugt werden für eine solche Initialisierung zwei oder drei Referenz-Punkte (mit korrespondierenden Referenz-Markern) verwendet.

Mit dieser Ausführungsform kann darüber hinaus auch das Koordinatensystem der virtuellen Repräsentation und insbesondere auch dessen Maßstab eingemessen werden, d.h. es werden die Entfernungen von - vorzugsweise vordefinierten - Referenz-Punkten im Koordinatensystem der virtuellen Repräsentation auf Distanzen zwischen korrespondierenden, vorzugsweise ebenfalls definierten Referenz-Markern im Raum normiert. Ferner können solche sehr ortsfesten Referenz-Marker der Garage als Bezugspunkte für Korrekturen der Positionen der anderen Referenz-Punkte in der virtuellen Repräsentation verwendet werden.

In einer weiteren erfindungsgemäßen Ausführungsform kann ein Definieren von Grenzen für das bewegliche Objekt in der virtuellen Repräsentation stattfinden, wobei diese Grenzen in der virtuellen Repräsentation Grenzen im Raum entsprechen können. Dies geschieht durch Einbringung von Grenz-Daten in den ersten Speicher.

Mit dieser Ausführungsform wird die Anwendbarkeit des erfindungsgemäßen Verfahrens für autonome bewegliche Objekte gesteigert. Bei derartigen beweglichen Objekten ist es häufig wichtig, dass sie im Betrieb bestimmte Grenzen nicht überschreiten. Das kann beispielsweise bei einem autonomen Fluggerät ein bestimmter Korridor sein, innerhalb dessen Flüge zugelassen sind. Bei einem Service-Roboter oder einem Räumungs-Roboter können damit Grenzen festgelegt werden, außerhalb derer der Einsatz der Geräte nicht mehr sinnvoll oder gefährlich ist, oder es kann sich um Grenzen im Gelände handeln, etwa um einen aufsteigenden Fels oder eine abfallende Klippe. Im Falle eines Rasenmähers als bewegliches Objekt kann es sich dabei um Grenzen des Grundstücks handeln oder um Bereiche, in die das Gerät nicht hineinfahren sollte, wie z.B. ein Gartenteich, ein Geräteschuppen oder Ähnliches.

Diese Grenzen im Raum werden dabei in die virtuelle Repräsentation eingetragen. Das kann entweder direkt geschehen, oder mittels einer geeigneten Schnittstelle. Diese Schnittstelle kann z.B. mit einem Digitalisierungstablett verbunden sein, mit einem Touchscreen oder mit ähnlichen Eingabegeräten. Diese Schnittstelle kann auch mit Koordinaten des Geländes, mit Längen- und Breitengraden, mit GPS-Koordinaten oder ähnlichen Darstellungen des Geländes verknüpft sein. Das Eintragen der Grenzen in die virtuelle Repräsentation kann auch in der Weise durchgeführt werden, dass mit dem beweglichen Objekt entlang dieser Grenzen gefahren wird, etwa mit einer Fernbedienung, mit Handsteuerung oder durch Transport mittels eines anderen beweglichen Objekts, und die gefahrene Strecke anschließend als Grenzlinie abgespeichert wird.

Die virtuelle Repräsentation, die in einem erfindungsgemäßen Verfahrens verwendet wird, ist bevorzugt als zweidimensionale oder dreidimensionale Karte ausgeführt.

Die virtuelle Repräsentation, so wie sie hier beschrieben ist, kann verschiedene Formate aufweisen. Sie kann orthogonale oder krummlinige Koordinatensysteme, bevorzugt ein kartesisches Koordinatensystem, besonders bevorzugt eine zweidimensionale oder dreidimensionale Karte, verwenden. Eine Repräsentation als zweidimensionale oder dreidimensionale Karte hat den Vorteil, dass Anwender einer erfindungsgemäßen Vorrichtung bei einer eventuellen Fehlfunktion sehr einfach den Inhalt der virtuellen Repräsentation auslesen und sehr intuitiv interpretieren können; damit kann die Problemanalyse deutlich beschleunigen werden.

Eine vorteilhafte Ausführungsform der vorliegenden Erfindung verwendet zur Ausführung des geschilderten Verfahrens ein Speichermedium mit darin gespeicherten Befehlen zur Steuerung eines Prozessors, die bei Ausführung mittels eines Prozessors ein hier beschriebenes Verfahren nach den Ansprüchen 1 bis 12 bewirken. Dazu wird ein Prozessor verwendet, der sich bevorzugt auf oder an dem beweglichen Objekt befindet oder damit verbunden ist. Dieser Prozessor wird mit den genannten Befehlen angesteuert. Diese sind in einem Speichermedium gespeichert, auf das der genannte Prozessor Zugriff hat, wobei dieser Speicher eine Festplatte sein kann, ein Flash-Speicher, ein SRAM- oder ein DRAM-Speicher, eine Kombination aus diesen Speichertypen oder ein anderer wiederbeschreibbarer Speicher. Die Befehle zur Durchführung des erfindungsgemäßen Verfahrens können dabei in demselben Speicher, einem unterschiedlichem Speicher wie die virtuelle Repräsentation gespeichert sein, oder auch in einem Speicher, der die selbe oder eine andere Technologie verwendet.

Eine erfindungsgemäße Vorrichtung zur Erzeugung und Aktualisierung von Positions-Informationen von Referenz-Punkten, bezogen auf eine virtuelle Repräsentation, die Positionen von Referenz-Markern in einem Raum entspricht, weist auf:
Speichermittel, Datenverarbeitungsmittel enthaltend wenigstens einen Prozessor, wenigstens eine Antriebseinheit zur Fortbewegung der Vorrichtung, wenigstens einen Sensor zur Erfassung von Richtungs-Informationen, dadurch gekennzeichnet, dass die Speichermittel Befehle zur Steuerung eines Prozessors enthalten, die bei Ausführung mittels des Prozessors ein Verfahren nach einem der Ansprüche 1 bis 12 implementieren, und wobei die Datenverarbeitungsmittel die wenigstens eine Antriebseinheit zur Bewegung der Vorrichtung gemäß Schritt c. ansteuern.

Eine derartige erfindungsgemäße Vorrichtung enthält Speichermittel, Datenverarbeitungsmittel mit wenigstens einem Prozessor, wenigstens einen Sensor zur Erfassung von Richtungs-Informationen. Die Speichermittel zur Steuerung eines Prozessors enthalten Befehle, die bei Ausführung mittels des Prozessors ein Verfahren wie oben geschildert implementieren.

Weitere Aspekte der Erfindung ergeben sich aus der nachfolgenden Beschreibung von verschiedenen Ausführungsformen der Erfindung, in Verbindung mit den Zeichnungen sowie den Ansprüchen.

Dabei zeigen:

Fig. 1a: eine schematische Darstellung der Bestimmung der Position eines Referenz-Markers, in einem 2-dimensionalen Raum;

Fig. 1b: eine schematische Darstellung korrespondierend zu der Darstellung gemäß **Fig. 1** der Bestimmung der Position eines Referenz-Punkts, in einer virtuellen Repräsentation in Form eines 2-dimensionalen kartesischen Koordinatensystems;

Fig. 2: eine schematische Illustration von Fehlergrenzen bei der Berechnung eines Referenz-Punkts in der virtuellen Repräsentation;

Fig. 3: eine schematische Illustration der Nicht-Identifizierbarkeit der Positionen von Referenz-Markern in einem Überlappungsbereich von Richtungs-Informationen;

Fig. 4a: eine schematische Darstellung des Bewegens des beweglichen Objekts und der Durchführung von Verfahrensschritten enthaltend das Ermitteln von Richtungs-Informationen, in dem 2-dimensionalen Raum;

Fig. 4b: eine schematische Darstellung des Ermittelns von Richtungs-Informationen, in der zum 2-dimensionalen Raum gemäß Fig. 4a korrespondierenden virtuellen Repräsentation;

Fig. 5: eine schematische Illustration der Berechnung der Position eines Referenz-Punkts und dessen Positions-Unsicherheiten in der virtuellen Repräsentation.

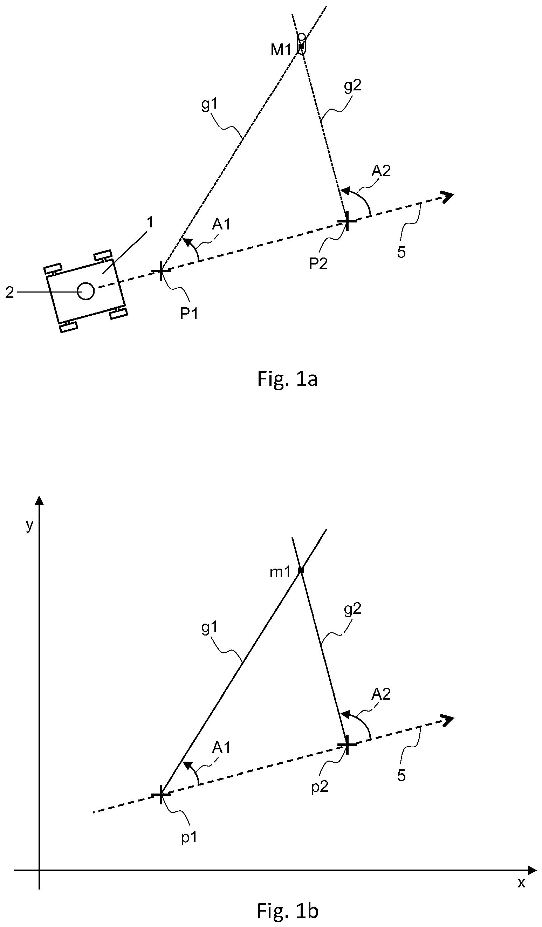

**Fig. 1a** zeigt schematisch die Bestimmung von Positionen P1 und P2 in einem 2-dimensionalen Raum durch ein bewegliches Objekt 1 mittels eines am beweglichen Objekt 1 angebrachten Detektionssystems 2. Das bewegliche Objekt 1 wird hier als ein Fahrzeug mit vier Rädern skizziert, das sich entlang einer Achse 5 fortbewegt. In dieser Darstellung ist das Detektionssystem 2 in der Mitte des beweglichen Objekts 1 montiert; dieses erfindungsgemäße Ausführungsbeispiel soll jedoch nicht den Umfang der Erfindung einschränken. Wie weiter oben erläutert, kann das Detektionssystem 2 auch auf einem anderen Objekt montiert, aber mit dem beweglichen Objekt 1 bezugsfest verbunden sein. Hierbei ist das Detektionssystem 2 mit dem beweglichen Objekt 1 über eine Kommunikationsverbindung, mittels einer Leitung oder drahtlos, verknüpft (hier nicht dargestellt).

Das bewegliche Objekt 1 befindet sich zunächst an einer Position P1 im Raum. Dort empfängt das bewegliche Objekt 1 mittels eines Detektionssystems 2 eine erste Richtungs-Information A1 vom Referenz-Marker M1, bezogen auf die Achse 5. In einer Ausführungsform weisen die Referenz-Marker Retroreflektoren auf, die die eingestrahlten elektromagnetischen Strahlung, welche vom Detektionssystem emittiert wird im Wesentlichen in die Richtung reflektiert, aus der sie eingetroffen ist. Die Achse 5 ist bevorzugt die Längsachse des beweglichen Objekts 1, wobei diese im vorliegenden Fall auch mit der Bewegungsrichtung übereinstimmt, es kann aber auch eine andere Referenzachse zur Anwendung kommen.

Insbesondere kann das Detektionssystem 2 auch einen Kompass aufweisen, und die Bezugsachse 5 kann durch diesen Kompass definiert werden, beispielsweise 0°, was zu einer absoluten (nicht relativen) Angabe von Richtungs-Informationen führen würde. Bevorzugt könnte ein magnetischer Kompass zum Einsatz kommen; in einer alternativen Ausführungsform kann der Kompass aber auch als Kreiselkompass, Gyroskop, Faserkreisel, Laserkreisel (Ringlaser) oder dergleichen ausgestaltet sein.

Nach einer Bewegung des bewegliche Objekts 1 zur Position P2 empfängt es dort ebenso wie an der Position P1 mittels seines Detektionssystems eine zweite Richtungs-Information A2, wiederum vom Referenz-Marker M1 und bezogen auf die Achse 5. Während der Bewegung des beweglichen Objekts zeichnet dieses also an verschiedenen Stellen im Raum erste und zweite Richtungs-informationen ein und desselben Referenz-Markers auf (und gegebenenfalls auch weiterer Marker), woraus im Verlauf dann die Referenz-Punkte, wie nachstehend beschrieben berechnet werden.

**Fig. 1b** zeigt schematisch die Berechnung der Position eines Referenz-Punkts m1 in der virtuellen Repräsentation, die der Position des Referenz-Markers M1 im Raum entspricht, ausgehend von zwei zuvor bestimmten Positions-Informationen p1 und p2, die den Positionen P1 und P2 im Raum entsprechen, und an denen Richtungs-Informationen A1 und A2, bezogen auf eine Achse 5 detektiert wurden. Dabei sind die Positions-Informationen p1 und p2 entweder direkt in die virtuelle Repräsentation eingetragen worden, oder sie wurden mittels der Bestimmung der Position der beweglichen Objekts 1 an den Punkten P1 und P2 gewonnen. Dieses Verfahren zur Berechnung der Position der beweglichen Objekts 1 wird in einer weiteren Patentanmeldung der gleichen Anmelderin beschrieben.

Für die Berechnung der Position des Referenz-Punkts m1 werden die Geraden g1 und g2 verwendet. Die Gerade g1 ist dadurch definiert, dass sie durch die Position p1 geht und im Winkel A1 von der Achse 5 absteht. Analog ist g2 definiert durch p2 und den Winkel A2 bezgl. der Achse 5. Der Referenz-Punkt m1 wird damit als der Schnittpunkt der Geraden g1 und g2 berechnet.

Im Unterschied zu üblichen Verfahren findet hier allerdings auch eine Bestimmung der Unsicherheit des Referenz-Punkts m1 statt, wie nachfolgend genauer beschrieben wird.

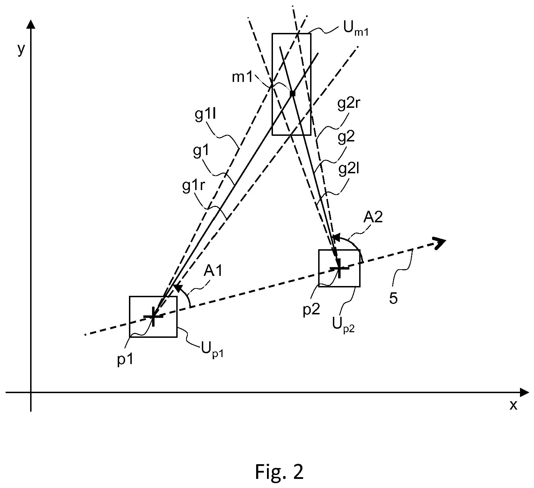

**Fig. 2** illustriert beispielhaft die Fehlergrenzen bei der Berechnung eines Referenz-Punkts m1 in der virtuellen Repräsentation mit einem 2-dimensionalen kartesischen Koordinatensystem, das durch eine x-Achse und eine y-Achse aufgespannt wird. Dabei wird, wie bei Fig. 1b erläutert, der Referenz-Punkt m1 als der Schnittpunkt der Geraden g1 und g2 berechnet. Wenn die Fehlergrenzen des Detektionssystems 2 berücksichtigt werden, wie diese beispielsweise durch eine limitierte Winkelauflösung und andere Effekte bei der Detektion hervorgerufen werden können, dann liegt m1, von p1 aus gesehen, mit einer hohen Wahrscheinlichkeit nicht genau auf der Geraden g1, sondern zwischen den Geraden g1l (der linken Fehlergrenze) und g1r (der rechten Fehlergrenze). Analog liegt m1, von p2 aus gesehen, mit einer hohen Wahrscheinlichkeit nicht genau auf der Geraden g2, sondern zwischen den Geraden g2l und g2r.

Unter Berücksichtigung der Fehlergrenzen des Detektionssystems 2 kann bestimmt werden, dass m1 in x-Richtung zwischen dem Schnittpunkt von g1l und g2l (linke Grenze) und dem Schnittpunkt von g1r und g2r (rechte Grenze) liegt. In y-Richtung liegt der Referenz-Punkt m1 zwischen dem Schnittpunkt von g1r und g2l (untere Grenze) und dem Schnittpunkt von g1l und g2r (obere Grenze). Das damit beschriebene Rechteck stellt die minimale Positions-Unsicherheit $U_{m1}$ des Referenz-Punkts m1 dar.

Bei dieser Illustration ist aus Gründen der Übersichtlichkeit nicht berücksichtigt ist allerdings die darüber hinaus bestehenden Orts-Unsicherheiten $D_{p1}$ und $U_{p2}$ der Positions-Informationen p1 und p2, die sich aus der Positionsbestimmung des beweglichen Objekts ergeben. Diese wirken sich auf die vorstehend beschriebene Bestimmung der Positions-Unsicherheit $U_{m1}$ ebenfalls aus - obgleich das an dieser Stelle nicht gezeigt oder beschrieben ist - und führen zu einer weiteren Vergrößerung derselben, da für die vorstehende Bestimmung von Um1 von einer klaren Position p1 und p2 ausgegangen wurde. Sobald diese Positions-Informationen jedoch zusätzlich mit Unsicherheiten in zumindest einer Dimension belegt sind, wirken sich diese gleichsam nach den Gesetzmäßigkeiten der Fehlerfortpflanzung auf die Positions-Unsicherheit $U_{m1}$ aus.

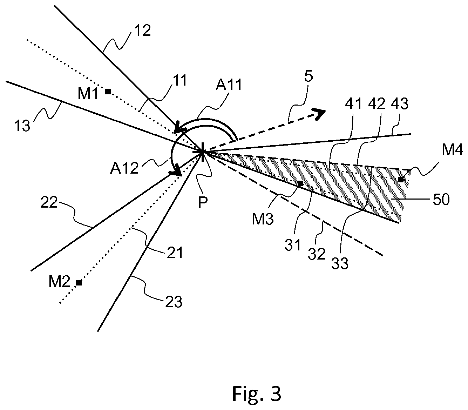

**Fig. 3** zeigt an einem Beispiel, was einem Punkt P im Raum, welcher gleichermaßen P1 oder P2 gemäß den vorstehenden Figuren sein kann bei bzw. im Rahmen der Ermittlung der Richtungs-Informationen abläuft. Hier wird illustriert, welche Referenz-Marker M1 bis M4 an der Position P unter Berücksichtigung von Richtungs-Unsicherheiten - welche durch die Detektionseinrichtung oder aber auch durch die Positions-Unsicherheiten, die mit den zu den Referenz-Markern M1 bis M4 korrespondierenden Referenz-Punkten m1 bis m4 gespeichert sind - identifizierbar, also eindeutig zuordenbar im Sinne dieser Erfindung sind.

Das bewegliche Objekt 1 befindet sich an der Position P und sämtliche gemessenen Richtungs-Informationen, d.h. im vorliegenden Fall Winkel, werden auf die Achse 5 bezogen. Für jeden der Referenz-Marker M1 bis M4 im Raum wurden an der Position P die Winkel A11, A21 usw. - in Richtung der Geraden 11, 21, 31, 41, bezogen auf die Achse 5 - durch das Detektionssystem ermittelt. Aus Gründen der Übersichtlichkeit werden hier nur die Winkel A11 und A21 dargestellt. Die zur Ermittlung von A11, A21 herangezogenen Winkelauflösungen des Detektionssystems 2, die Orientierung der Achse 5, die Position P und die Positionen der Referenz-Marker M1 bis M4 sind mit Unsicherheiten beaufschlagt (die sich aus den zu den Referenz-Markern M1 bis M4 korrespondierenden gespeicherten Referenz-Punkten m1 bis m4 ergeben). Daher werden die Signale derzugehörigen Referenz-Marker M1 bis M4 nicht genau aus den jeweiligen Richtungen der Geraden 11, 21, 31, 41 zu erwarten sein, sondern vielmehr aus einem Bereich jeweils zwischen einer zugehörigen rechten Fehlergrenze 12, 22, 32, 42 und einer entsprechenden linken Fehlergrenze 13, 23, 33, 43 zu diesen Richtungsgeraden.

Hierauf basierend werden für jede der Positionen der Referenz-Marker M1 bis M4 Bereiche angegeben, innerhalb derer sie unter Berücksichtigung sämtlicher Richtungs-Unsicherheiten detektiert werden können. So kann die Position des Referenz-Markers M1 irgendwo zwischen den Geraden 12 und 13 detektiert werden; analog kann M2 zwischen 22 und 23, M3 zwischen 32 und 33 (die Geraden 32 und 33 sind gestrichelt dargestellt) und M4 zwischen 42 und 43 detektiert werden. Dabei wird deutlich, dass sich die Richtungs-Unsicherheiten für die Positionen der Marker M3 und M4 überlappen können: Wenn ein Signal in einem Überlappungsbereich 50, zwischen den Geraden 42 und 33, detektiert wird, dann könnte es entweder von dem Referenz-Marker M3 oder von dem Referenz-Marker M4 stammen; ein solches Signal kann also innerhalb des Überlappungsbereichs 50 nicht eindeutig einem der Referenz-Marker M3 oder M4 zugeordnet werden und die entsprechenden Referenz-Marker somit nicht eindeutig identifiziert werden.

Damit sind - sofern nicht weitere Maßnahmen ergriffen werden, mit denen die Richtungs-Unsicherheiten vermindert werden oder aber unabhängig davon eine eindeutige Zuordnung von Signalen zu Referenz-Markern möglich ist, wie beispielsweise die Bestimmung der Signalreihenfolge bei rotierenden Detektionssystemen - diese Richtungs-Informationen für die weiteren Berechnungen nicht verwendbar und zu verwerfen. In dem dargestellten Beispiel sind also nur die Referenz-Marker M1 und M2 identifizierbar im sinne der Erfindung, nicht aber die Referenz-Marker M3 und M4, weil diese sich innerhalb des Überlappungsbereichs 50 befinden, der aufgrund der Richtungs-Unsicherheiten entsteht.

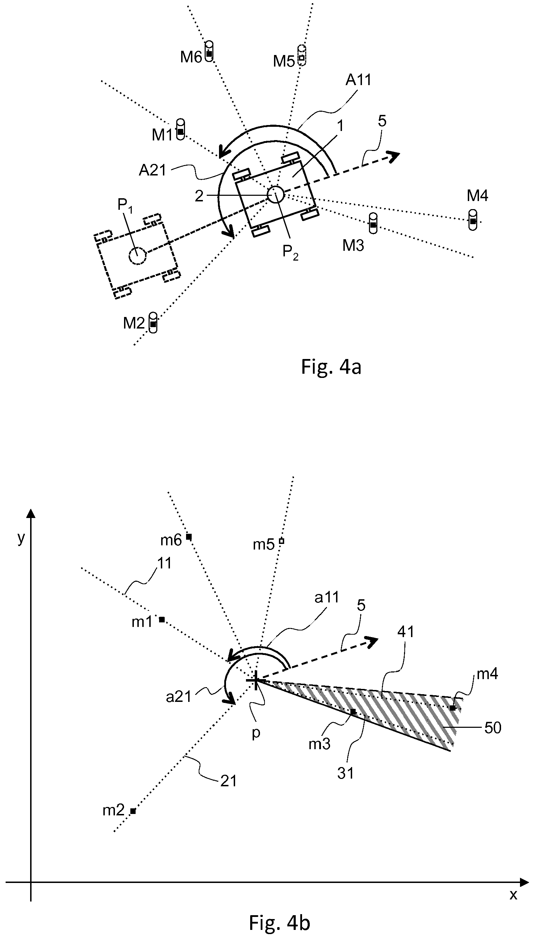

**Fig. 4a** zeigt schematisch, wie das bewegliche Objekt 1 von einer ersten Position $P_1$ im Raum zur einer zweiten Position $P_2$ bewegt wurde, an der die Erfassung der Richtungs-Informationen durchgeführt wird. An der Stelle $P_2$ scannt das Detektionssystem 2 die Referenz-Marker M1 bis M4 und M6, wobei der Referenz-Marker M1 die Richtungs-Information A11 und M2 die Richtungs-Information A21 aufweist, bezogen auf die Achse 5. Aus Gründen der Übersichtlichkeit wurden nur die Winkel A11 und A21 dargestellt; es wird aber versucht, Richtungs-Informationen für alle Referenzmarker M1 bis M4 und M6 zu bestimmen.

In dieser Darstellung wird der Referenz-Marker M6 als ein neuer Referenz-Marker dargestellt, also ein solcher, für den in der virtuellen Repräsentation noch kein Referenz-Punkt m6 eingetragen ist, und der Referenz-Marker M5 wird als zwar einen korrespondierenden Referenz-Punkt m5 in der virtuellen Repräsentation aufweisender Marker gezeigt, der aber entfernt wurde oder aber aus anderen Gründen durch die Detektion nicht erfasst werden kann. Für ein erfindungsgemäßes System stellt es sich in ähnlicher Weise dar, wenn ein Referenz-Marker von der Position M5 im Raum auf die Position M6 verschoben wurde.

**Fig. 4b** zeigt schematisch innerhalb der virtuellen Repräsentation, welche der gescannten Signale für die weiteren Verfahrensschritte verwendet werden: Die Signale mit der Winkel-Information a11 - die der Richtungs-Information A11 beim Scan-Vorgang entspricht - können dem Referenz-Punkt m1 zugeordnet werden, Signale mit der Winkel-Information a21 - entsprechend der Richtungs-Information A21 - dem Referenz-Punkt m2. Signale, die innerhalb des Überlappungsbereichs 50 von Richtungs-Unsicherheiten in Bezug auf zwei Referenz-Marker reflektiert werden, können jedoch nicht eindeutig zugeordnet werden; die Referenz-Marker M3 und M4, entsprechend den Referenz-Punkten m3 und m4, sind also nicht identifizierbar im Sinne der Erfindung.

Ferner wird der Referenz-Punkt m5 aus dem ersten Speicher gelöscht oder aber zur Löschung attributiert, weil der Referenz-Marker M5 im Raum entfernt wurde und daher aus dieser Richtung kein Signal mehr erfasst wird. Der Referenz-Punkt m6 wird hingegen der virtuellen Repräsentation im ersten Speicher hinzugefügt, weil der Referenz-Marker M6 im Raum neu erfasst wurde und es bisher keine Eintragung eines Referenz-Punkts an der korrespondierenden Position im ersten Speicher gab.

Für die weiteren Verfahrensschritte, die in dieser Figur nicht mehr gezeigt sind, da sie letztlich an einem weiteren Punkt p erneut ablaufen, um hierdurch dann die Positionen und Positions-Unsicherheiten der Referenz-Punkte zu berechnen können also nur die Referenz-Marker M1, M2 und M6 und die diesen jeweils zugeordneten Richtungs-Informationen A11, A21 verwendet werden.

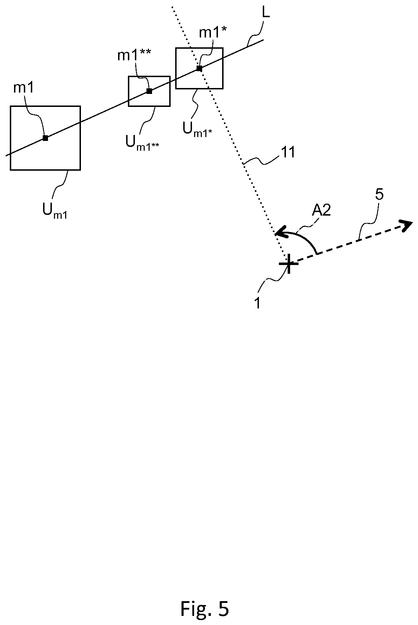

**Fig. 5** zeigt schematisch, wie die Position eines gespeicherten Referenz-Punkts m1, mit den Positions-Unsicherheiten $U_{m1}$, optimiert werden kann. Dabei berechnet das bewegliche Objekt 1, in dem das erfindungsgemäße Verfahren bevorzugt abläuft, mit der Richtungs-Information A2, bezogen auf die Achse 5, einen Referenz-Punkt m1* - gegebenenfalls nach einer vorhergehenden, nicht gezeigten analogen Bestimmung der Richtungs-Information von einem anderen Punkt aus.

Die Positionsberechnung des Referenz-Punkts m1* kann hiernach entweder durch die Bildung des Schnittpunkts der Richtungs-Informationen mehrerer aufeinander folgender Messungen erfolgen oder alternativ, oder ergänzend, durch Fällung des Lots L vom gespeicherten Referenz-Punkt m1 auf die eine Gerade 11, die im Winkel A2 zur Achse 5 steht. Im letzteren Fall wird die existierende Position des Referenz-Punkts m1 verwendet und mit der letzten bestimmten Richtungs-Information, bzw. der sich hieraus ergebenden Geraden 11 verrechnet. Am Schnittpunkt der Geraden 11 mit dem Lot L wird dann der berechnete Referenz-Punkt m1* definiert; dabei wird der Referenz-Punkt m1* mit einer ebenfalls auf der Grundlage der Fehlerfortpflanzung berechneten Unsicherheit $U_{m1*}$ attributiert.

Die Position des optimierten Referenz-Punkts m1** errechnet sich nun aus dem gewichteten Mittel der berechneten Position des Referenz-Punkts m1* und der gespeicherten Position des Referenz-Punkts m1; die optimierte Positions-Unsicherheit $U_{m1**}$ errechnet sich aus den gewichteten Unsicherheiten $U_{m1*}$ und $U_{m1}$, wie nachfolgend näher beschrieben wird.

Die Position des optimierten Referenz-Punkts m1**, also die gewichtete Entfernung zwischen m1 und m1*, errechnet sich damit zu:

$$m1** = m1 + ( \text{ Distanz } (m1 ; m1*) * ( (U_{m1})^2 / ( (U_{m1})^2 + (U_{m1*})^2 ) ) ) \qquad \text{(Gl. 1)}$$

Die Unsicherheit $U_{m1**}$ für die Position m1** errechnet sich zu:

$$U_{m1**} = (U_{m1} * U_{m1*}) / \text{Quadratwurzel} ( (U_{m1})^2 + (U_{m1*})^2 ) \qquad \text{(Gl. 2)}$$

Im gezeigten Beispiel weisen die Positionen m1 (40; 70) und m1* (100; 90) die Unsicherheiten $U_{m1}$ (24; 22) und $U_{m1*}$ (8; 7) auf.

Damit errechnet sich bei diesem Beispiel

$$m1** |_x = 40 + ( ( 100 - 40 ) * ( 24^2 / ( 24^2 + 8^2 ) ) ) = 94{,}0$$

$$m1^{**} \big|_y = 70 + ( (90 - 70) * ( 22^2 / ( 22^2 + 7^2 ) ) ) = 88{,}2$$

$$U_{m1^{**}} \big|_x = ( 24 * 8 ) / \text{Quadratwurzel} ( ( 24^2 + 8^2 ) ) = 7{,}6$$

$$U_{m1^{**}} \big|_y = ( 22 * 7 ) / \text{Quadratwurzel} ( ( 22^2 + 7^2 ) ) = 6{,}7$$

## Patentansprüche

1. Verfahren zur Erzeugung oder Aktualisierung von Positionen von innerhalb einer virtuellen Repräsentation gespeicherten Referenz-Punkten (m1, m2, m3, m4), die Positionen von Referenz-Markern (M1, M2, M3, M4) in einem Raum entsprechen, wobei die gespeicherten Referenz-Punkte (m1, m2, m3, m4) mit Positions-Unsicherheiten ($U_{m1}$, $U_{m2}$, $U_{m3}$, $U_{m4}$) verknüpft sind, und wobei die virtuelle Repräsentation in einem ersten Speicher gespeichert ist, mit:

   a. bestimmen einer ersten Positions-Information (p1) innerhalb der virtuellen Repräsentation für ein bewegliches Objekt (1), die einer ersten Position des beweglichen Objekts (1) im Raum (P1) im Wesentlichen entspricht, wobei die erste Positions-Information (p1) mit ersten Orts-Unsicherheiten ($U_{p1}$) in jeder Dimension beaufschlagt ist;

   b. erfassen, an der ersten Position im Raum (P1), von ersten Richtungs-Informationen (A1) von einem oder mehreren Referenz-Markern (M1, M2, M3, M4) im Raum, bezogen auf eine Achse (5) des beweglichen Objekts (1), durch wenigstens ein Detektionssystem (2), das mit dem beweglichen Objekt (1) verbunden ist, wobei die ersten Richtungs-Informationen (A1) mit ersten Richtungs-Unsicherheiten ($U_{A1}$) beaufschlagt sind;

   c. bewegen des beweglichen Objekts (1) zu einer zweiten Position im Raum (P2), wobei die zweite Position (P2) eine bekannte Wegstrecke von der ersten Position (P1) entfernt ist;

   d. bestimmen einer zweiten Positions-Information (p2) innerhalb der virtuellen Repräsentation für das bewegliche Objekt (1), die der zweiten Position im Raum (P2) im Wesentlichen entspricht, wobei die zweite Positions-Information (p2) mit zweiten Orts-Unsicherheiten ($U_{p2}$) in jeder Dimension beaufschlagt ist;

   e. erfassen, an der zweiten Position im Raum (P2), von zweiten Richtungs-Informationen (A2) von dem einen oder den mehreren Referenz-Markern (M1, M2, M3, M4) im Raum, bezogen auf die Achse (5) des beweglichen Objekts (1), durch das Detektionssystem (2), wobei die zweiten Richtungs-Informationen (A2) mit zweiten Richtungs-Unsicherheiten ($U_{A2}$) beaufschlagt sind;

   f. identifizieren eines oder mehrerer Referenz-Marker (M1, M2, M3, M4), zu denen die ersten und zweiten Richtungs-Informationen (A1, A2) jeweils eindeutig zuordenbar sind;

   g. berechnen der Position von Referenz-Punkten (m1*, m2*, m3*, m4*) in der virtuellen Repräsentation für jeden der identifizierten Referenz-Marker (M1, M2, M3, M4) auf der Basis der ersten und/oder zweiten Richtungs-Informationen (A1, A2) und der ersten bzw. zweiten Positions-Information (p1, p2), wobei die Position jedes berechneten Referenz-Punkts (m1*, m2*, m3*, m4*) mit berechneten Positions-Unsicherheiten ($U_{m1*}$, $U_{m2*}$, $U_{m3*}$, $U_{m4*}$) in jeder Dimension beaufschlagt ist;

   h. speichern der Position jedes berechneten Referenz-Punkts (m1*, m2*, m3*, m4*), zusammen mit dessen Positions-Unsicherheiten ($U_{m1*}$, $U_{m2*}$, $U_{m3*}$, $U_{m4*}$) in einem zweiten Speicher;

   i. vergleichen der Position jedes berechneten Referenz-Punkts (m1*, m2*, m3*, m4*) und dessen Positions-Unsicherheiten ($U_{m1*}$, $U_{m2*}$, $U_{m3*}$, $U_{m4*}$) jeweils mit der Position seines korrespondierenden gespeicherten Referenz-Punkts (m1, m2, m3, m4) und dessen Positions- Unsicherheiten ($U_{m1}$, $U_{m2}$, $U_{m3}$, $U_{m4}$);

   k. berechnen, aus der Position des gespeicherten Referenz-Punkts (m1) und dessen gespeicherten Positions-Unsicherheiten ($U_{m1}$) und der Position des berechneten Referenz-Punkts (m1*) und dessen berechneten Positions-Unsicherheiten ($U_{m1*}$), einer Position eines optimierten Referenz-Punkts (m1**) mit optimierten Positions-Unsicherheiten ($U_{m1**}$), und

   speichern der Position des optimierten Referenz-Punkts (m1**) und dessen Positions-Unsicherheiten ($U_{m1**}$) in dem ersten Speicher anstelle des der Berechnung zugrunde liegenden gespeicherten Referenz-Punkts (m1) und dessen Positions-Unsicherheiten ($U_{m1}$), wobei die Berechnung des optimierten Referenz-Punkts (m1**) mit dessen Positions-Unsicherheiten ($U_{m1**}$) durch Bildung eines gewichteten Mittelwerts auf Basis der Position des gespeicherten Referenz-Punkts (m1) mit dessen Positions-Unsicherheiten ($U_{m1}$) und der Position des berechneten Referenz-Punkts (m1*) mit dessen Positions-Unsicherheiten

($U_{m1*}$) bestimmt wird, so dass der optimierte Referenz-Punkt (m1**) der Referenz-Punkt ist, der am nächsten an der Referenz-Punkt-Position (m1, m1*) mit den geringeren Positions-Unsicherheiten ($U_{m1}$, $U_{m1*}$) liegt.

2. Verfahren nach Anspruch 1, wobei das Berechnen der Position von Referenz-Punkten (m1*, m2*, m3*, m4*) in der virtuellen Repräsentation für jeden der identifizierten Referenz-Marker (M1, M2, M3, M4)

- durch Bildung eines Schnittpunkts von aufgrund der ersten und zweiten Richtungs-Informationen (A1, A2) gebildeten Geraden durch jeweils den ersten bzw. zweiten durch die Positions-Information (p1, p2) definierten Punkt erfolgt; oder
- durch Bildung eines Schnittpunkts von einer aufgrund der ersten oder zweiten Richtungs-Informationen (A1, A2) gebildeten Geraden durch den ersten bzw. zweiten durch die Positions-Information (p1, p2) definierten Punkt mit einem hierauf vom jeweils entsprechenden gespeicherten Referenz-Punkt (m1, m2, m3, m4) gefällten Lot erfolgt.

3. Verfahren nach Anspruch 1 oder 2, weiterhin aufweisend:
j. speichern der Position des berechneten Referenz-Punkts (m2*) und dessen Positions-Unsicherheiten ($U_{m2*}$) in dem ersten Speicher anstelle des korrespondierenden gespeicherten Referenz-Punkts (m2) und dessen Positions-Unsicherheiten ($U_{m2}$), wenn Schritt i. ergibt, dass sich die Position des gespeicherten Referenz-Punkts (m2) mit dessen gespeicherten Positions-Unsicherheiten ($U_{m2}$) und die Position des berechneten Referenz-Punkts (m2*) mit dessen Positions-Unsicherheiten ($U_{m2*}$) in wenigstens einer Dimension überlappen, und wenn die berechneten Positions-Unsicherheiten ($U_{m2*}$) des berechneten Referenz-Punkts (m2*) geringer sind als die gespeicherten Positions-Unsicherheiten ($U_{m2*}$) des gespeicherte Referenz-Punkts (m2).

4. Verfahren nach einem der vorhergehenden Ansprüche, weiterhin aufweisend:
l. speichern der Position eines berechneten Referenz-Punkts (m5*) und dessen Positions-Unsicherheiten ($U_{m5*}$), wenn die Position des berechneten Referenz-Punkts (m5*) mit dessen Positions-Unsicherheiten ($U_{m5*}$) mit der Position keines gespeicherten Referenz-Punkts (m1, m2, m3, m4) mit dessen Positions-Unsicherheiten ($U_{m1}$, $U_{m2}$, $U_{m3}$, $U_{m4}$) überlappt.

5. Verfahren nach einem der vorhergehenden Ansprüche, weiterhin aufweisend:
m. attributieren zum Löschen der Position eines gespeicherten Referenz-Punkts (m6) mit dessen Positions-Unsicherheiten ($U_{m6}$) wenn die Position des gespeicherten Referenz-Punkts (m6) mit dessen Positions-Unsicherheiten ($U_{m6}$) mit der Position keines berechneten Referenz-Punkts (m1*, m2*, m3*, m4*) mit dessen Positions-Unsicherheiten ($U_{m1*}$, $U_{m2*}$, $U_{m3*}$, $U_{m4*}$) überlappt.

6. Verfahren nach einem der vorherigen Ansprüche, wobei die Verfahrensschritte a. bis i. und gegebenenfalls l. bis m. in vorbestimmten zeitlichen oder räumlichen Abständen wiederholt werden.

7. Verfahren nach Anspruch 6, weiterhin aufweisend:
l+. speichern der Position eines berechneten Referenz-Punkts (m5*) und dessen Positions-Unsicherheiten ($U_{m5*}$), wenn die Position des berechneten Referenz-Punkts (m5*) mit dessen Positions-Unsicherheiten ($U_{m5*}$) mit der Position keines gespeicherten Referenz-Punkts (m1, m2, m3, m4) mit dessen Positions-Unsicherheiten ($U_{m1}$, $U_{m2}$, $U_{m3}$, $U_{m4}$) bei wenigstens zwei aufeinander folgenden Wiederholungen der Verfahrensschritte a. bis i. und vorzugsweise bei fünf aufeinander folgenden Wiederholungen der Verfahrensschritte a. bis i. überlappt.

8. Verfahren nach Anspruch 6, soweit dieser auf Anspruch 4 rückbezogen ist, weiterhin aufweisend:
j+. Löschen der Position eines gespeicherten Referenz-Punkts (m6) und dessen Positions-Unsicherheiten ($U_{m6}$) eine Attributierung des gespeicherten Referenz-Punkts (m6) mit dessen Positions-Unsicherheiten ($U_{m6}$) bei wenigstens zwei aufeinander folgenden Wiederholungen der Verfahrensschritte a. bis i. und vorzugsweise bei fünf aufeinander folgenden Wiederholungen der Verfahrensschritte a. bis i. erfolgt ist.

9. Verfahren nach einem der vorherigen Ansprüche, wobei
f+. die Referenz-Marker (M1, M2, M3, M4) nicht identifiziert werden, wenn wenigstens eine erfasste Richtungs-Information (A1, A2) in Folge der gespeicherten Positions-Unsicherheiten ($U_{m1}$, $U_{m2}$, $U_{m3}$, $U_{m4}$), die dem zu dem Referenz-Marker (M1, M2, M3, M4) korrespondierenden Referenz-Punkt (m1, m2, m3, m4) zugeordnet sind, zu mehr als einem der Referenz-Marker (M1, M2, M3, M4) gehören kann.

10. Verfahren nach einem der vorherigen Ansprüche,

h+. wobei wenigstens einer der gespeicherten Referenz-Punkte (m1, m2) in der virtuellen Repräsentation, korrespondierend zu wenigstens einem der vordefinierten Referenz-Marker (M1, M2) im Raum hinsichtlich seiner gespeicherten Position und, optional, einer gespeicherten Positions-Unsicherheit definiert ist, und, optional, unveränderlich ist.

11. Verfahren nach einem der vorherigen Ansprüche, wobei die virtuelle Repräsentation eine zweidimensionale oder dreidimensionale Karte ist.

12. Speichermedium mit darin gespeicherten Befehlen zur Steuerung eines Prozessors, die bei Ausführung mittels eines Prozessors ein Verfahren nach einem der Ansprüche 1 bis 11 implementieren.

13. Vorrichtung (1) aufweisend: Speichermittel, Datenverarbeitungsmittel enthaltend wenigstens einen Prozessor, wenigstens eine Antriebseinheit zur Fortbewegung der Vorrichtung, wenigstens einen Sensor (2) zur Erfassung von Richtungs-Informationen und,
**dadurch gekennzeichnet, dass**
die Speichermittel Befehle zur Steuerung eines Prozessors enthalten, die bei Ausführung mittels des Prozessors ein Verfahren nach einem der Ansprüche 1 bis 11 implementieren, und wobei
die Datenverarbeitungsmittel die wenigstens eine Antriebseinheit zur Bewegung der Vorrichtung gemäß Schritt c. ansteuern.

**Claims**

1. Method for generating or updating positions of reference points (m1, m2, m3, m4) which are stored within a virtual representation and correspond to positions of reference markers (M1, M2, M3, M4) in a space, wherein the stored reference points (m1, m2, m3, m4) are associated with positional uncertainties ($U_{m1}$, $U_{m2}$, $U_{m3}$, $U_{m4}$), and wherein the virtual representation is stored in a first memory, the method involving:

   a. determining a first piece of positional information (p1) within the virtual representation for a mobile object (1) that substantially corresponds to a first position of the mobile object (1) in the space (P1), wherein the first piece of positional information (p1) is subjected to first locational uncertainties ($U_{p1}$) in each dimension;
   b. detecting, at the first position in the space (P1), first pieces of directional information (A1) of one or more reference markers (M1, M2, M3, M4) in the space, with respect to an axis (5) of the mobile object (1), by means of at least one detection system (2) connected to the mobile object (1), wherein the first pieces of directional information (A1) are subjected to first directional uncertainties ($U_{A1}$);
   c. moving the mobile object (1) to a second position in the space (P2), wherein the second position (P2) is at a known distance from the first position (P1);
   d. determining a second piece of positional information (p2) within the virtual representation for the mobile object (1) that substantially corresponds to the second position in the space (P2), wherein the second piece of positional information (p2) is subjected to second locational uncertainties ($U_{p2}$) in each dimension;
   e. detecting, at the second position in the space (P2), second pieces of directional information (A2) of the one or more reference markers (M1, M2, M3, M4) in the space, with respect to the axis (5) of the mobile object (1), by means of the detection system (2), wherein the second pieces of directional information (A2) are subjected to second directional uncertainties ($U_{A2}$);
   f. identifying one or more reference markers (M1, M2, M3, M4) to which the first and second pieces of directional information (A1, A2) can be respectively assigned;
   g. calculating the position of reference points (m1*, m2*, m3*, m4*) in the virtual representation for each of the identified reference markers (M1, M2, M3, M4) on the basis of the first and/or second pieces of directional information (A1, A2) and the first or second pieces of positional information (p1, p2), wherein the position of each calculated reference point (m1*, m2*, m3*, m4*) is subjected to calculated positional uncertainties ($U_{m1*}$, $U_{m2*}$, $U_{m3*}$, $U_{m4*}$) in each dimension;
   h. storing the position of each calculated reference point (m1* m2*, m3*, m4*) together with its positional uncertainties ($U_{m1*}$, $U_{m2*}$, $U_{m3*}$, $U_{m4*}$) in a second memory;
   i. comparing the position of each calculated reference point (m1*, m2*, m3*, m4) and its positional uncertainties ($U_{m1*}$, $U_{m2*}$, $U_{m3*}$, $U_{m4*}$) with the position of its corresponding stored reference point (m1, m2, m3, m4) and its positional uncertainties ($U_{m1}$, $U_{m2}$, $U_{m3}$, $U_{m4}$);
   k. calculating, from the position of the stored reference point (m1) and its stored positional uncertainties ($U_{m1}$) and the position of the calculated reference point (m1*) and its calculated positional uncertainties ($U_{m1*}$), a position of an optimised reference point (m1**) with optimised positional uncertainties ($U_{m1**}$), and storing the position of the optimised reference point (m1**) and its positional uncertainties ($U_{m1**}$) in the first memory instead of the stored reference point (m1) and its positional uncertainties ($U_{m1}$) on which the calculation is based, wherein the calculation of the optimised reference point (m1**) with its positional uncertainties ($U_{m1**}$) is determined by forming a weighted average on the basis of the position of the stored reference point (m1) with its positional uncertainties ($U_{m1}$) and the position of the calculated reference point (m1*) with its positional uncertainties ($U_{m1*}$), such that the optimised reference point (m1**) is the reference point closest to the reference point position (m1, m1*) with the lower positional uncertainties ($U_{m1}$, $U_{m1*}$).

2. Method according to claim 1, wherein the calculation of the position of reference points (m1*, m2*, m3*, m4*) in the virtual representation for each of the identified reference markers (M1, M2, M3, M4) is carried out by

- forming a point of intersection of straight lines formed on the basis of the first and second pieces of directional information (A1, A2) and extending, respectively, through the first and the second point defined by the piece of positional information (p1, p2); or
- forming a point of intersection of a straight line formed on the basis of the first or second pieces of directional information (A1, A2) and extending through the first or second point defined by the piece of positional information (p1, p2) with a perpendicular let fall thereon from the relevant corresponding reference point (m1, m2, m3, m4).

3. Method according to either claim 1 or claim 2, further involving:
j. storing the position of the calculated reference point (m2*) and its positional uncertainties ($U_{m2*}$) in the first memory instead of the corresponding stored reference point (m2) and its positional uncertainties ($U_{m2}$) when step i results in the position of the stored reference point (m2) with its stored positional uncertainties ($U_{m2}$) overlapping with the position of the calculated reference point (m2*) with its positional uncertainties ($U_{m2*}$) in at least one dimension, and when the calculated positional uncertainties ($U_{m2*}$) of the calculated reference point (m2*) are lower than the stored positional uncertainties ($U_{m2*}$) of the stored reference point (m2).

4. Method according to any one of the preceding claims, further involving:
l. storing the position of a calculated reference point (m5*) and its positional uncertainties ($U_{m5*}$) when the position of the calculated reference point (m5*) with its positional uncertainties ($U_{m5*}$) does not overlap with the position of any stored reference point (m1, m2, m3, m4) with its positional uncertainties ($U_{m1}$, $U_{m2}$, $U_{m3}$, $U_{m4}$).

5. Method according to any one of the preceding claims, further involving:
m. attributing the position of a stored reference point (m6) with its positional uncertainties ($U_{m6}$) for deletion when the position of the stored reference point (m6) with its positional uncertainties ($U_{m6}$) does not overlap with the position of any calculated reference point (m1*, m2*, m3*, m4*) with its positional uncertainties ($U_{m1*}$, $U_{m2*}$, $U_{m3*}$, $U_{m4*}$).

6. Method according to any one of the preceding claims, wherein method steps a. to i. and optionally l. to m. are repeated at predetermined temporal or spatial intervals.

7. Method according to claim 6, further involving:
l+. storing the position of a calculated reference point (m5*) and its positional uncertainties ($U_{m5*}$) when the position of the calculated reference point (m5*) with its positional uncertainties ($U_{m5*}$) does not overlap with the position of any stored reference point (m1, m2, m3, m4) with its positional uncertainties ($U_{m1}$, $U_{m2}$, $U_{m3}$, $U_{m4}$) in at least two successive repetitions of method steps a. to i. and preferably in five successive repetitions of method steps a. to i.

8. Method according to claim 6, when referring back to claim 4, further involving:
j+. deleting the position of a stored reference point (m6) and its positional uncertainties ($U_{m6}$) when there is an attribution of the stored reference point (m6) with its positional uncertainties ($U_{m6}$) in at least two successive repetitions of method steps a. to i. and preferably in five successive repetitions of method steps a. to i.

9. Method according to any one of the preceding claims, wherein
f+. the reference markers (M1, M2, M3, M4) are not identified when at least one detected piece of directional information (A1, A2) can belong to more than one of the reference markers (M1, M2, M3, M4) due to the stored positional uncertainties ($U_{m1}$, $U_{m2}$, $U_{m3}$, $U_{m4}$) which are associated with the reference point (m1, m2, m3, m4) corresponding to the reference marker (M1, M2, M3, M4).

10. Method according to any one of the preceding claims,

h+. wherein at least one of the stored reference points (m1, m2) in the virtual representation, corresponding to at least one of the predefined reference markers (M1, M2) in the space, is defined in terms of its stored position and, optionally, a stored positional uncertainty, and is optionally invariable.

**11.** Method according to any one of the preceding claims, wherein the virtual representation is a two-dimensional or three-dimensional map.

**12.** Memory medium having instructions stored therein for controlling a processor which, when executed by a processor, implement a method according to any one of claims 1 to 11.

**13.** Device (1) comprising: memory means, data processing means containing at least one processor, at least one drive unit for moving the device, at least one sensor (2) for detecting pieces of directional information and, **characterised in that** the memory means contains instructions for controlling a processor which, when executed by the processor, implement a method according to any one of claims 1 to 11, and the data processing means actuating the at least one drive unit for moving the device according to step c.

**Revendications**

**1.** Procédé de production ou d'actualisation de positions de points de référence (m1, m2, m3, m4) mémorisés à l'intérieur d'une représentation virtuelle qui correspondent aux positions de marqueurs de référence (M1, M2, M3, M4) dans un espace, les points de référence mémorisés (m1, m2, m3, m4) étant associés avec des incertitudes positionnelles ($U_{m1}$, $U_{m2}$, $U_{m3}$, $U_{m4}$) et la représentation virtuelle étant mémorisée dans une première mémoire, comprenant

    a. la détermination d'une première information positionnelle (p1) à l'intérieur de la représentation virtuelle pour un objet mobile (1), qui correspond sensiblement à une première position de l'objet mobile (1) dans l'espace (P1), la première information positionnelle (p1) étant soumise à de premières incertitudes positionnelles ($U_{p1}$) dans chaque dimension;

    b. l'enregistrement sur la première position dans l'espace (P1) de premières informations directionnelles (A1) d'un ou plusieurs marqueurs de référence (M1, M2, M3, M4) dans l'espace, par rapport à un axe (5) de l'objet mobile (1), par au moins un système de détection (2) qui est relié avec l'objet mobile (1), les premières informations directionnelles (A1) étant soumises à de premières incertitudes directionnelles ($U_{A1}$);

    c. le déplacement de l'objet mobile (1) jusqu'à une deuxième position dans l'espace (P2), la deuxième position (P2) étant éloignée de la première position (P1) d'une distance connue;

    d. la détermination d'une deuxième information positionnelle (p2) à l'intérieur de la représentation virtuelle pour l'objet mobile (1), qui correspond sensiblement à la deuxième position dans l'espace(P2), la deuxième information positionnelle (p2) étant soumise à des deuxièmes incertitudes positionnelles ($U_{p2}$) dans chaque dimension;

    e. l'enregistrement sur la deuxième position dans l'espace (P2) de deuxièmes informations directionnelles (A2) d'un ou plusieurs marqueurs de référence (M1, M2, M3, M4) dans l'espace, par rapport à un axe (5) de l'objet mobile (1), par le système de détection (2), les deuxièmes informations directionnelles (A2) étant soumises à de deuxièmes incertitudes directionnelles ($U_{A2}$);

    f. l'identification d'un ou plusieurs marqueurs de référence (M1, M2, M3, M4) auxquels les premières et deuxièmes informations directionnelles (A1, A2) peuvent être associées de façon univoque;

    g. le calcul de la position de points de référence (m1*, m2*, m3*, m4*) dans la représentation virtuelle pour chacun des marqueurs de référence (M1, M2, M3, M4) identifiés sur la base des premières et/ou deuxièmes informations directionnelles (A1, A2) et des premières et/ou deuxièmes informations positionnelles (p1, p2), la position de chaque point de référence calculé (m1*, m2*, m3*, m4*) étant soumise à des incertitudes positionnelles calculées ($U_{m1*}$, $U_{m2*}$, $U_{m3*}$, $U_{m4*}$) dans chaque dimension;

    h. la mémorisation de la position de chaque point de référence calculé (m1*, m2*, m3*, m4*) avec ses incertitudes positionnelles ($U_{m1*}$, $U_{m2*}$, $U_{m3*}$, $U_{m4*}$) dans une deuxième mémoire;

    i. la comparaison de la position de chaque point de référence calculé (m1*, m2*, m3*, m4*) et de ses incertitudes positionnelles ($U_{m1*}$, $U_{m2*}$, $U_{m3*}$, $U_{m4*}$) avec la position de son point de référence mémorisé (m1, m2, m3, m4) correspondant et de ses incertitudes positionnelles ($U_{m1}$, $U_{m2}$, $U_{m3}$, $U_{m4}$);

    k. le calcul, à partir de la position du point de référence mémorisé (m1) et de ses incertitudes positionnelles mémorisées ($U_{m1}$) et de la position du point de référence calculé (m1*) et de ses incertitudes positionnelles calculées ($U_{m1*}$), de la position d'un point de référence optimisé (m1**) avec des incertitudes positionnelles optimisées ($U_{m1**}$) et

la mémorisation de la position du point de référence optimisé (m1**) et de ses incertitudes positionnelles ($U_{m1**}$) dans la première mémoire à la place du point de référence mémorisé (m1) à la base du calcul et de ses incertitudes positionnelles ($U_{m1}$),
le calcul du point de référence optimisé (m1**) avec ses incertitudes positionnelles ($U_{m1**}$) étant déterminé par la production d'une valeur moyenne pondérée sur la base de la position du point de référence mémorisé (m1) avec ses incertitudes positionnelles ($U_{m1}$) et de la position du point de référence calculé (m1*) avec ses incertitudes positionnelles ($U_{m1*}$), de sorte que le point de référence optimisé (m1**) est le point de référence qui est le plus proche de la position du point de référence (m1, m1*) avec les incertitudes positionnelles ($U_{m1}$, $U_{m1*}$) réduites.

2. Procédé selon la revendication 1, dans lequel le calcul de la position de points de référence (m1*, m2*, m3*, m4*) dans la représentation virtuelle pour chacun des marqueurs de référence (M1, M2, M3, M4) se fait

    - par la création d'une intersection des droites obtenues sur la base des première et deuxième informations directionnelles (A1, A2) avec le premier et/ou le deuxième point défini par l'information positionnelle (p1, p2) ou
    - par la création d'une intersection d'une droite obtenue sur la base des première ou deuxième informations directionnelles (A1, A2) avec le premier et/ou le deuxième point défini par l'information positionnelle (p1, p2) avec une verticale tombant du point de référence mémorisé (m1, m2, m3, m4) correspondant.

3. Procédé selon la revendication 1 ou 2, comprenant en outre
j la mémorisation de la position du point de référence calculé (m2*) et de ses incertitudes positionnelles ($U_{m2*}$) dans la première mémoire à la place du point de référence mémorisé (m2) correspondant et de ses incertitudes position-nelles ($U_{m2}$), si, à l'étape i, la position du point de référence mémorisé (m2) avec ses incertitudes positionnelles mémorisées ($U_{m2}$) et la position du point de référence calculé (m2*) avec ses incertitudes positionnelles ($U_{m2*}$) se chevauchent dans au moins une dimension, et si les incertitudes positionnelles calculées ($U_{m2*}$) du point de référence calculé (m2*) sont inférieures aux incertitudes positionnelles mémorisées ($U_{m2}$) du point de référence mémorisé (m2).

4. Procédé selon une des revendications précédentes, comprenant en outre
l. la mémorisation de la position du point de référence calculé (m5*) et de ses incertitudes positionnelles ($U_{m5*}$) si la position du point de référence calculé (m5*) avec ses incertitudes positionnelles mémorisées ($U_{m5*}$) ne chevauche la position d'aucun des points de référence mémorisés (m1, m2, m3, m4) avec leurs incertitudes positionnelles ($U_{m1}$, $U_{m2}$, $U_{m3}$, $U_{m4}$).

5. Procédé selon une des revendications précédentes, comprenant en outre
m. l'affectation d'attributs pour supprimer la position d'un point de référence mémorisé (m6) avec ses incertitudes positionnelles ($U_{m6}$) si la position du point de référence mémorisé (m6) avec ses incertitudes positionnelles mémo-risées ($U_{m6}$) ne chevauche la position d'aucun des points de référence calculés (m1*, m2*, m3*, m4*) avec leurs incertitudes positionnelles ($U_{m1*}$, $U_{m2*}$, $U_{m3*}$, $U_{m4*}$).

6. Procédé selon une des revendications précédentes dans lequel les étapes de procédé a à i, et le cas échéant 1 à m, sont répétées à intervalles réguliers dans le temps ou dans l'espace.

7. Procédé selon la revendication 6, comprenant en outre
l+. la mémorisation de la position d'un point de référence calculé (m5*) et de ses incertitudes positionnelles ($U_{m5*}$) si la position du point de référence calculé (m5*) avec ses incertitudes positionnelles mémorisées ($U_{m5*}$) ne chevauche la position d'aucun des points de référence mémorisés (m1, m2, m3, m4) avec leurs incertitudes positionnelles ($U_{m1}$, $U_{m2}$, $U_{m3}$, $U_{m4}$) pendant au moins deux répétitions successives des étapes de procédé a à i et de préférence pendant cinq répétitions successives des étapes de procédé a à i.

8. Procédé selon la revendication 6, dans la mesure où celle-ci fait référence à la revendication 4, comprenant en outre
j+. la suppression de la position d'un point de référence mémorisé (m6) et de ses incertitudes positionnelles ($U_{m6}$) si une attribution du point de référence mémorisé (m6) avec ses incertitudes positionnelles mémorisées ($U_{m6}$) se produit pendant au moins deux répétitions successives des étapes de procédé a à i et de préférence pendant cinq répétitions successives des étapes de procédé a à i.

9. Procédé selon une des revendications précédentes dans lequel
f+. les marqueurs de référence (M1, M2, M3, M4) ne sont pas identifiés si au moins une information directionnelle

EP 2 749 982 B1

enregistrée (A1, A2) à la suite des incertitudes positionnelles mémorisées ($U_{m1}$, $U_{m2}$, $U_{m3}$, $U_{m4}$) qui sont associées avec le point de référence (M1, m2, m3, m4) correspondant au marqueur de référence (M1, M2, M3, M4) peut appartenir à plus d'un marqueur de référence (M1, M2, M3, M4).

10. Procédé selon une des revendications précédentes
h+. dans lequel au moins un des points de référence mémorisés (m1, m2) est défini dans la représentation virtuelle, correspondant à au moins un des marqueurs de référence prédéfinis (M1, M2) dans l'espace en ce qui concerne sa position mémorisée et, facultativement, une incertitude positionnelle mémorisée et, facultativement, est invariable.

11. Procédé selon une des revendications précédentes dans lequel la représentation virtuelle est une carte bidimensionnelle ou tridimensionnelle.

12. Moyen de mémorisation avec des instructions mémorisées à l'intérieur pour contrôler un processeur qui appliquent un procédé selon une des revendications 1 à 11 quand elles sont exécutées au moyen d'un processeur.

13. Dispositif (1) comprenant des moyens de mémorisation, des moyens de traitement de données contenant au moins un processeur, au moins une unité motrice pour déplacer le dispositif et au moins un capteur (2) pour enregistrer des informations directionnelles,
**caractérisé en ce que**
les moyens de mémorisation contiennent des instructions pour contrôler un processeur qui appliquent un procédé selon une des revendications 1 à 11 quand elles sont exécutées au moyen du processeur et
les moyens de traitement de données contrôlent l'au moins une unité motrice pour déplacer le dispositif selon l'étape c.

Fig. 1a

Fig. 1b

Fig. 2

Fig. 3

Fig. 4a

Fig. 4b

Fig. 5